# EUROPEAN PATENT APPLICATION

(11) **EP 4 238 719 A1**
(43) Date of publication of application: **06.09.2023**
(21) Application number: 20959846.5
(22) Date of filing: 30.10.2020
(51) Int. Cl.: B25J 13/08

(54) **ROBOT SYSTEM, ROBOT ARM, END EFFECTOR, AND ADAPTER**

(71) Applicant: NIKON CORPORATION, Minato-ku Tokyo 108-6290 (JP)
(72) Inventor: MIYAKAWA Tomoki, Tokyo 108-6290 (JP)
(74) Representative: Hoffmann Eitle
(86) International application number: PCT/JP2020/040779
(87) International publication number: WO 2022/091328

(57) **Abstract**

A robot system including a robot arm with a movable portion includes a first imaging device and a second imaging device attached to the robot arm, a control unit that controls the robot system, a distance information acquisition unit that acquires information on a distance to a target object, the control unit is capable of changing a baseline length that is a distance between the first imaging device and the second imaging device, and the distance information acquisition unit acquires the information on the distance to the target object on the basis of the baseline length.

## Description

### [Technical Field]

The present invention relates to a robot system, robot arm, end effector, and adapter.

### [Background Art]

A robot system including an imaging device is known. For example, Patent Literature 1 describes a configuration in which an imaging device is attached to a robot arm.

### [Citation List]

### [Patent Literature]

[Patent Literature 1]
Japanese Unexamined Patent Application, First Publication No. 2010-131685

### [Summary of Invention]

An aspect of a robot system of the present invention is a robot system including a robot arm with a movable portion, the robot system including: a first imaging device and a second imaging device attached to the robot arm; a control unit configured to control the robot system; and a distance information acquisition unit configured to acquire information on a distance to a target object, wherein the control unit is capable of changing a baseline length, the baseline length being a distance between the first imaging device and the second imaging device, and the distance information acquisition unit acquires the information on the distance to the target object on the basis of the baseline length.

An aspect of a robot system of the present invention is a robot system including a robot arm with a movable portion, the robot system including: a first imaging device and a second imaging device attached to the robot arm, wherein at least one of the first imaging device and the second imaging device is movable with respect to the robot arm.

An aspect of a robot system of the present invention is a robot system including a robot arm with a movable portion, the robot system including: an end effector attached to the robot arm; and a first imaging device and a second imaging device attached to the end effector, wherein at least one of the first imaging device and the second imaging device is movable with respect to the end effector.

An aspect of a robot system of the present invention is a robot system including a robot arm with a movable portion, the robot system including: an adapter for attaching an end effector to the robot arm; and a first imaging device and a second imaging device attached to the adapter, wherein at least one of the first imaging device and the second imaging device is movable with respect to the adapter.

An aspect of a robot system of the present invention is a robot system including a robot arm with a movable portion, the robot system including: a first imaging device and a second imaging device attached to the robot arm, wherein relative positions of the first imaging device and the second imaging device are variable.

An aspect of a robot system of the present invention is a robot system including a robot arm with a movable portion, the robot system including: an end effector attached to the robot arm; and a first imaging device and a second imaging device attached to the end effector, wherein relative positions of the first imaging device and the second imaging device are variable.

An aspect of a robot system of the present invention is a robot system including a robot arm with a movable portion, the robot system including: an adapter for attaching an end effector to the robot arm; and a first imaging device and a second imaging device attached to the adapter, wherein relative positions of the first imaging device and the second imaging device are variable.

An aspect of a robot system of the present invention is a robot system including a robot arm with a movable portion, the robot system including: a first imaging device configured to be movable with respect to the robot arm; and a distance information acquisition unit configured to acquire information on a distance to a target object on the basis of an image captured by the first imaging device, wherein the first imaging device captures a first image of the target object at a first position, and captures a second image of the target object at a second position different from the first position, and the distance information acquisition unit acquires the information on the distance to the target object on the basis of the first image and the second image.

An aspect of a robot system of the present invention is a robot system including a robot arm with a movable portion, the robot system including: an end effector attached to the robot arm; a first imaging device configured to be movable with respect to the end effector; and a distance information acquisition unit configured to acquire information on a distance to a target object on the basis of an image captured by the first imaging device, wherein the first imaging device captures a first image of the target object at a first position, and captures a second image of the target object at a second position different from the first position, and the distance information acquisition unit acquires the information on the distance to the target object on the basis of the first image and the second image.

An aspect of a robot system of the present invention is a robot system including a robot arm with a movable portion, the robot system including: an adapter for attaching the end effector to the robot arm; and a first imaging device configured to be movable with respect to the adapter; and a distance information acquisition unit configured to acquire information on a distance to a target object on the basis of an image captured by the first imaging device, wherein the first imaging device captures a first image of the target object at a first position, and captures a second image of the target object at a second position different from the first position, and the distance information acquisition unit acquires the information on the distance to the target object on the basis of the first image and the second image.

An aspect of a robot system of the present invention includes a robot arm; three or more imaging devices configured to image a target object; and a control unit configured to acquire information on a distance to the target object on the basis of information of images of the target object acquired by two of the three or more imaging devices.

An aspect of a robot system of the present invention includes a robot arm; three or more imaging devices configured to image a target object; and a control unit configured to control at least one of the robot arm and an end effector connected to the robot arm on the basis of information on images acquired by two of the three or more imaging devices.

An aspect of a robot system of the present invention includes a robot arm; and three or more imaging devices, wherein the three or more imaging devices are disposed around any one of the robot arm, an end effector connected to the robot arm, and an adapter for attaching the end effector.

An aspect of a robot arm of the present invention includes a first holding portion configured to hold a first imaging device; and a second holding portion configured to hold a second imaging device, wherein the first imaging device is held to be movable by the first holding portion, or the second imaging device is held to be movable by the second holding portion.

An aspect of an end effector of the present invention is an end effector attached to a robot arm, the end effector including: a first holding portion configured to hold a first imaging device; and a second holding portion configured to hold a second imaging device, wherein the first imaging device is held to be movable by the first holding portion, or the second imaging device is held to be movable by the second holding portion.

An aspect of an adapter of the present invention is an adapter for attaching an end effector to a robot arm, the adapter including: a first holding portion configured to hold a first imaging device; and a second holding portion configured to hold a second imaging device, wherein the first imaging device is held to be movable by the first holding portion, or the second imaging device is held to be movable by the second holding portion.

An aspect of a robot arm of the present invention includes: a first holding portion configured to hold a first imaging device; and a second holding portion configured to hold a second imaging device, wherein relative positions of the first imaging device and the second imaging device are variable.

An aspect of an end effector of the present invention is an end effector attached to a robot arm, the end effector including: a first holding portion configured to hold a first imaging device; and a second holding portion configured to hold a second imaging device, wherein relative positions of the first imaging device and the second imaging device are variable.

An aspect of an adapter of the present invention is an adapter for attaching an end effector to a robot arm, the adapter including: a first holding portion configured to hold a first imaging device; and a second holding portion configured to hold a second imaging device, wherein relative positions of the first imaging device and the second imaging device are variable.

An aspect of a robot arm of the present invention includes: a holding portion configured to hold three or more imaging devices configured to image a target object; and a control unit configured to acquire information on a distance of the target object on the basis of information of images of the target object acquired by two of the three or more imaging devices.

### [Brief Description of Drawings]

FIG. 1 is a perspective view illustrating a robot system of a first embodiment.
FIG. 2 is a block diagram illustrating a portion of a configuration of the robot system of the first embodiment.
FIG. 3 is a perspective view illustrating a portion of a robot arm, an end effector, an adapter, and an imaging device of the first embodiment.
FIG. 4 is a plan view illustrating the portion of the robot arm, the end effector, the adapter, and the imaging device of the first embodiment.
FIG. 5 is a view of a portion of the end effector, the first imaging device, and the second imaging device viewed from a distal end side in the central axis direction.
FIG. 6 is a view of the portion of the end effector, the first imaging device, and the second imaging device viewed from the distal end side in the central axis direction, and is a view illustrating a case in which the first imaging device and the second imaging device is located at predetermined initial positions.
FIG. 7 is a perspective view illustrating a portion of a robot system of a second embodiment.
FIG. 8 is a view of a portion of the robot system of the third embodiment viewed from a distal end side in a central axis direction.
FIG. 9 is a view of a portion of a robot system of a fourth embodiment viewed from a distal end side in a central axis direction.
FIG. 10 is a view of a portion of a robot system of a fifth embodiment viewed from a distal end side in a central axis direction.
FIG. 11 is a diagram illustrating a portion of a procedure when the robot system according to the fifth embodiment acquires information on a distance to a target object.
FIG. 12A is a diagram illustrating an example of a case in which a zoom magnification of the imaging device in the fifth embodiment is relatively low and two images with a relatively large baseline length are selected.
FIG. 12B is a diagram illustrating an example of a case in which a zoom magnification of the imaging device in the fifth embodiment is relatively high and two images with a relatively large baseline length are selected.
FIG. 12C is a diagram illustrating an example of a case in which a zoom magnification of the imaging device in the fifth embodiment is relatively high and two images with a relatively small baseline length are selected.
FIG. 13 is a perspective view illustrating a robot system according to a sixth embodiment.
FIG. 14 is a perspective view illustrating a robot system according to a seventh embodiment.
FIG. 15 is a perspective view illustrating a robot system according to an eighth embodiment.
FIG. 16 is a perspective view illustrating a robot system according to a ninth embodiment.

### [Description of Embodiments]

Hereinafter, a robot system, a robot arm, an end effector, and an adapter according to embodiments of the present invention will be described with reference to the drawings. A scope of the present invention is not limited to the following embodiments, and can be arbitrarily changed within the scope of the technical idea of the present invention. Further, in following the drawings, a scale, numbers, and the like of each structure may be different from a scale, numbers, and the like of an actual structure in order to make each configuration easier to understand.

### <First embodiment>

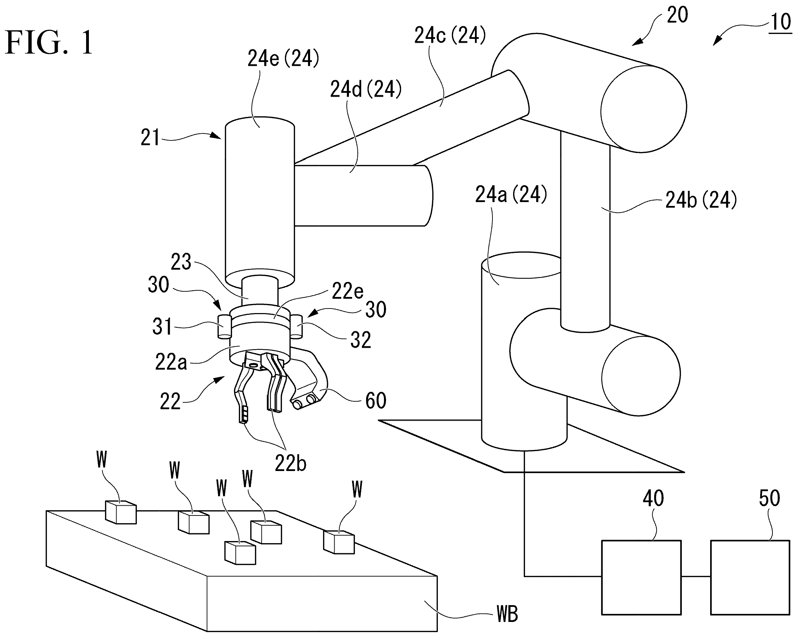

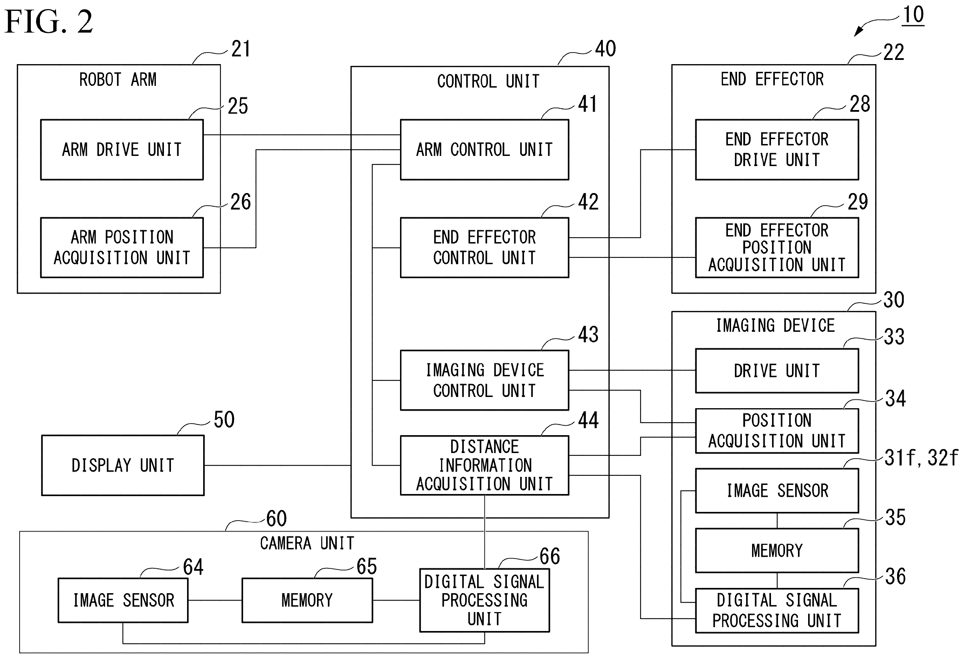

FIG. 1 is a perspective view illustrating a robot system 10 of the present embodiment. FIG. 2 is a block diagram illustrating a portion of a configuration of the robot system 10 of the present embodiment.

As illustrated in FIG. 1, the robot system 10 includes a robot 20 and an imaging device 30, a control unit 40, and a display unit 50. The robot 20 performs, for example, work on a target object W on a workbench WB.

The robot 20 includes a robot arm 21, an end effector 22, and an adapter 23. The robot arm 21 includes an arm portion 24 as a movable portion. In the present embodiment, a plurality of arm portions 24 are provided. The robot arm 21 is, for example, a multi-joint arm configured by connecting the plurality of arm portions 24. The arm portion 24 includes, for example, five arm portions including a first arm portion 24a, a second arm portion 24b, a third arm portion 24c, a fourth arm portion 24d, and a fifth arm portion 24e. The first arm portion 24a, the second arm portion 24b, the third arm portion 24c, the fourth arm portion 24d, and the fifth arm portion 24e are connected in this order from an installation surface of the robot arm 21.

As illustrated in FIG. 2, the robot arm 21 includes an arm drive unit 25 and an arm position acquisition unit 26. The arm drive unit 25 is, for example, a servomotor. The arm drive unit 25 is provided to each arm portion 24, for example. That is, five arm drive units 25 are provided, for example.

The arm drive unit 25 provided on the first arm portion 24a displaces the first arm portion 24a with an installation surface of the robot 20 as a reference. The arm drive unit 25 provided on the second arm portion 24b displaces the second arm portion 24b with the first arm portion 24a as a reference. The arm drive unit 25 provided on the third arm portion 24c displaces the third arm portion 24c with the second arm portion 24b as a reference. The arm drive unit 25 provided on the fourth arm portion 24d displaces the fourth arm portion 24d with the third arm portion 24c as a reference. The arm drive unit 25 provided in the fifth arm portion 24e displaces the fifth arm portion 24e with the fourth arm portion 24d as a reference. Each arm drive unit 25 rotates one arm portion 24, for example.

The arm position acquisition unit 26 includes, for example, a rotary encoder (not illustrated). The arm position acquisition unit 26 is provided to each arm portion 24, for example. That is, five arm position acquisition units 26 are provided, for example. The arm position acquisition unit 26 provided in the first arm portion 24a can detect an amount of displacement of the first arm portion 24a with the installation surface of the robot 20 as a reference. The arm position acquisition unit 26 provided in the second arm portion 24b can detect an amount of displacement of the second arm portion 24b with the first arm portion 24a as a reference. The arm position acquisition unit 26 provided in the third arm portion 24c can detect an amount of displacement of the third arm portion 24c with the second arm portion 24b as a reference. The arm position acquisition unit 26 provided in the fourth arm portion 24d can detect an amount of displacement of the fourth arm portion 24d with the third arm portion 24c as a reference. The arm position acquisition unit 26 provided in the fifth arm portion 24e can detect an amount of displacement of the fifth arm portion 24e with the fourth arm portion 24d as a reference. The amount of displacement of each arm portion 24 that can be detected by each arm position acquisition unit 26 includes, for example, a rotation angle of each arm portion 24 detected by the rotary encoder (not illustrated).

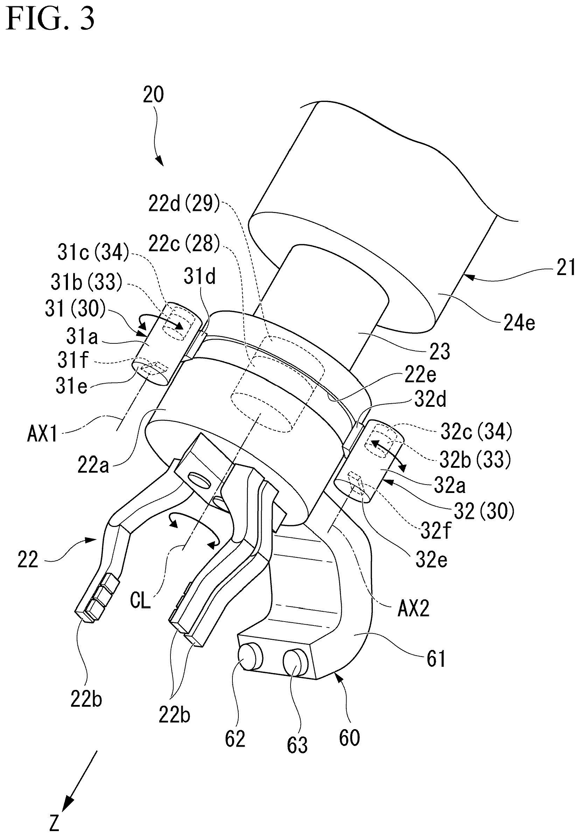

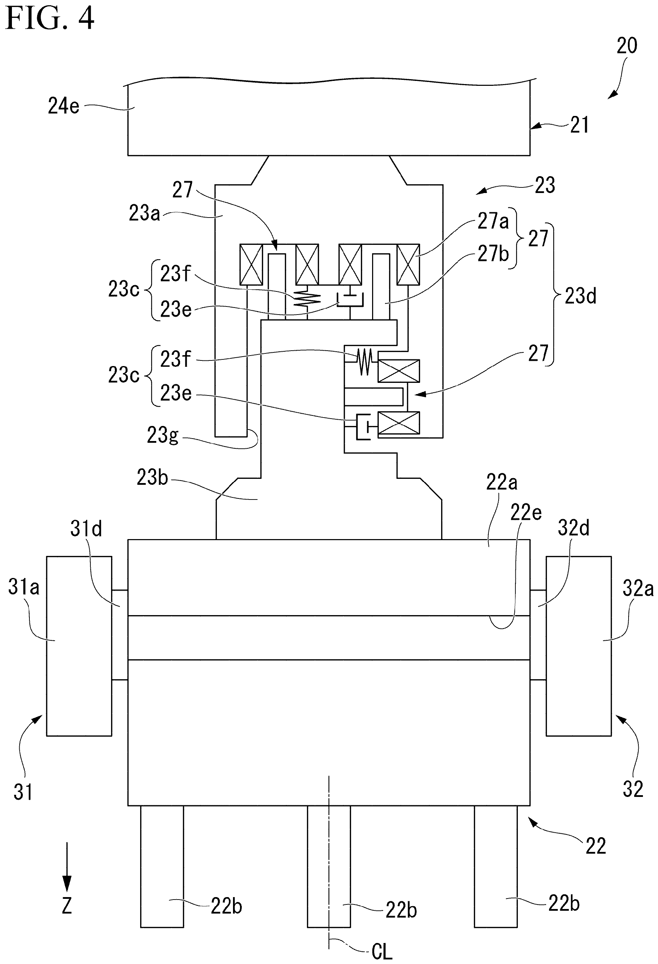

FIG. 3 is a perspective view illustrating a portion of the robot arm 21, the end effector 22, the adapter 23, and the imaging device 30 of the present embodiment. FIG. 4 is a plan view illustrating the portion of the robot arm 21, the end effector 22, the adapter 23, and the imaging device 30 of the present embodiment.

The end effector 22 is attached to the robot arm 21 as illustrated in FIGS. 3 and 4. In the present embodiment, the end effector 22 is attached to a distal end portion of the fifth arm portion 24e via the adapter 23. The end effector 22 is detachably attached to the robot arm 21, for example. The end effector 22 is interchangeable with another end effector.

As the end effector 22 attached to the robot arm 21, an end effector having various shapes, structures, and functions can be appropriately adopted according to work performed by the robot 20. Examples of the end effector 22 attached to the robot arm 21 may include a robot hand capable of gripping the target object W, a processing head that performs laser processing or ultrasonic processing, a camera, an injector that injects molten metal or resin, or particles for blast processing, or the like, a manipulator, and an air blower.

In the present embodiment, the end effector 22 is a multi-fingered robot hand capable of gripping the target object W on the workbench WB. As illustrated in FIG. 3, the end effector 22 includes a base portion 22a, a plurality of finger portions 22b, an end effector drive unit 28, and an end effector position acquisition unit 29. The base portion 22a is connected to the fifth arm portion 24e via the adapter 23, for example. The base portion 22a has, for example, a cylindrical shape around a central axis CL illustrated in each figure. The central axis CL appropriately illustrated in each figure is a central axis of the end effector 22, the adapter 23, and the fifth arm portion 24e.

In the following description, a direction parallel to the central axis CL is referred to as a "central axis direction" and is indicated as a Z axis in each figure. A positive side (+Z side) of the Z axis in a central axis direction is referred to as a "distal end side", and a negative side (-Z side) in the central axis direction is referred to as a "proximal end side". Further, unless otherwise specified, a radial direction centered on the central axis CL is simply referred to as a "radial direction", and a circumferential direction around the central axis CL is simply referred to as a "circumferential direction".

In the present embodiment, the base portion 22a is provided with a guide rail portion 22e. The guide rail portion 22e is, for example, an annular groove surrounding the base portion 22a in the circumferential direction. The plurality of finger portions 22b protrude from the base portion 22a toward a distal end side (+Z side) in the central axis direction. In the present embodiment, the end effector 22 can grip the target object W with the plurality of finger portions 22b. The number of finger portions 22b is not particularly limited.

The end effector drive unit 28 can drive the end effector 22. The end effector drive unit 28 includes a rotation drive unit 22c. The rotation drive unit 22c is provided inside the base portion 22a, for example. The rotation drive unit 22c is, for example, a servomotor capable of rotating the base portion 22a around the central axis CL. Although illustration is omitted, the end effector drive unit 28 has a finger drive unit that drives the plurality of finger portions 22b. The finger drive unit is provided, for example, for the plurality of finger portions 22b. One finger drive unit may be provided for each finger portion 22b, or a plurality of finger drive units may be provided for each finger portion 22b. The finger drive unit, for example, displaces an angle of the finger portion 22b with respect to the base portion 22a. The finger drive unit is, for example, a servomotor.

The end effector position acquisition unit 29 can acquire a relative position of the end effector 22 with respect to the adapter 23. The end effector position acquisition unit 29 has a rotational position acquisition unit 22d. The rotational position acquisition unit 22d is provided inside the base portion 22a, for example. The rotational position acquisition unit 22d can detect a rotational position of the end effector 22. The rotational position acquisition unit 22d can detect, for example, a rotational angle of the base portion 22a around the central axis CL. The rotational position acquisition unit 22d is, for example, a rotary encoder. The end effector position acquisition unit 29 may include, for example, a sensor capable of detecting the position and angle of the finger portion 22b with respect to the base portion 22a.

A camera unit 60 is attached to the end effector 22 in the present embodiment. The camera unit 60 is fixed to the base portion 22a. The camera unit 60 includes a support portion 61, a first camera 62 and a second camera 63. The support portion 61 protrudes from the base portion 22a toward the distal end side (+Z side) in the central axis direction. An end portion on the proximal end side (-Z side) of the support portion 61 is connected to an outer peripheral surface at an end portion on the distal end side of the base portion 22a. The first camera 62 and the second camera 63 are fixed to an end portion on the distal end side of the support portion 61. The first camera 62 and the second camera 63 can image the plurality of finger portions 22b and the target object W gripped by the finger portions 22b. A stereo camera is configured of the first camera 62 and the second camera 63. In FIG. 4, illustration of the camera unit 60 is omitted.

The camera unit 60 has an image sensor 64, a memory 65, and a digital signal processing unit 66, as illustrated in FIG. 2. The image sensor 64 is, for example, a CCD image sensor or a CMOS image sensor. The image sensor 64 is provided for each of the first camera 62 and the second camera 63. Each image sensor 64 converts an optical signal incident on a camera with the image sensor 64 into an analog electrical signal, converts the converted analog electrical signal into a digital image signal, and outputs the digital image signal.

The digital signal processing unit 66 performs image processing such as digital amplification, color interpolation processing, and white balance processing on the digital image signal output from the image sensor 64. The digital image signal processed by the digital signal processing unit 66 may be temporarily stored in the memory 65 or may be output to the control unit 40 without being stored in the memory 65. The digital image signal output from the digital signal processing unit 66 to the control unit 40 is output to a distance information acquisition unit 44, which will be described below.

The memory 65 can store the digital image signal output from the image sensor 64 and the digital image signal output from the digital signal processing unit 66. The memory 65 is, for example, a volatile memory. The memory 65 may be a non-volatile memory. The digital image signal output from the image sensor 64 is, for example, stored in the memory 65, and then is sent from the memory 65 to the digital signal processing unit 66 and subjected to image processing in the digital signal processing unit 66.

One memory 65 and one digital signal processing unit 66 may be provided inside the camera unit 60 and used for both the image sensor 64 of the first camera 62 and the image sensor 64 of the second camera 63 or may be provided for each of the image sensor 64 of the first camera 62 and the image sensor 64 of the second camera 63. Further, some or both of the memory 65 and the digital signal processing unit 66 may be provided outside the camera unit 60, such as the control unit 40. Further, the camera unit 60 may be configured to have only one camera.

The adapter 23 is a member for attaching the end effector 22 to the robot arm 21. As illustrated in FIG. 4, the adapter 23 includes a support portion 23a, a pedestal portion 23b, a connection portion 23c, and a pedestal drive unit 23d. The support portion 23a is a portion connected to the robot arm 21. The support portion 23a is detachably connected to, for example, the distal end portion of the fifth arm portion 24e. The support portion 23a includes a concave portion 23g that is recessed from the distal end side (+Z side) to the proximal end side (-Z side) in the central axis direction. The support portion 23a may be non-detachably fixed to the robot arm 21.

The pedestal portion 23b is disposed on a distal end side (+Z side) of the support portion 23a. The pedestal portion 23b is a portion to which the end effector 22 is connected. In the present embodiment, the base portion 22a of the end effector 22 is detachably connected to an end portion on the distal end side (+Z side) of the pedestal portion 23b. The end effector 22 may be non-detachably fixed to the pedestal portion 23b. A portion on the proximal end side (-Z side) of the pedestal portion 23b is inserted, for example, into the concave portion 23g. For example, a gap is provided between the support portion 23a and the pedestal portion 23b, and the support portion 23a and the pedestal portion 23b do not come into direct contact with each other.

The connection portion 23c is provided inside the concave portion 23g. The connection portion 23c is provided between the support portion 23a and the pedestal portion 23b. The connection portion 23c connects the support portion 23a to the pedestal portion 23b. That is, in the present embodiment, the support portion 23a and the pedestal portion 23b are indirectly connected to each other via the connection portion 23c in a state in which the support portion 23a and the pedestal portion 23b do not come into direct contact with each other. The connection portion 23c supports a mass of the pedestal portion 23b and a mass of the end effector 22.

The connection portion 23c includes a damper element 23e and a spring element 23f. The spring element 23f may be, for example, an elastic member whose elastic force is adjustable. In this case, the robot system 10 may include an adjustment unit capable of adjusting the elastic force of the spring element 23f. The spring element 23f may be, for example, an air spring. In this case, the elastic force of the spring element 23f may be adjusted by adjusting air pressure of an air spring with the adjustment unit. For example, a plurality of connection portions 23c are provided. The plurality of connection portions 23c includes, for example, a connection portion 23c including a damper element 23e and a spring element 23f that receive force and are displaced in the central axis direction, and a connection portion 23c including a damper element 23e and a spring element 23f that receive force and are displaced in a direction perpendicular to the central axis direction.

The connection portion 23c can reduce, for example, a vibration of the end effector 22 and a vibration given from the outside. The connection portion 23c suppresses a displacement of the end effector 22 and a displacement of the pedestal portion 23b caused by a weight of the end effector 22 and a weight of the pedestal portion 23b. The connection portion 23c can support the end effector 22 in a direction of gravity regardless of a posture of the end effector 22. In addition to the damper element 23e and the spring element 23f, the connection portion 23c may include other elements capable of reducing the vibration of the end effector 22, for example. The other elements include, for example, a piezoelectric element (piezo element).

The pedestal drive unit 23d is provided, for example, between the support portion 23a and the pedestal portion 23b inside the concave portion 23g. The pedestal drive unit 23d can displace a position of the pedestal portion 23b with respect to the support portion 23a. The pedestal drive unit 23d can move the end effector 22 connected to the pedestal portion 23b by moving the pedestal portion 23b.

The pedestal drive unit 23d includes, for example, a plurality of linear motors 27. The linear motor 27 is, for example, a voice coil motor. The linear motor 27 includes a magnetic field generation unit 27a and a magnet portion 27b. One of the magnetic field generation unit 27a and the magnet portion 27b is attached to the support portion 23a, and the other is attached to the pedestal portion 23b. In FIG. 4, for example, the magnetic field generation unit 27a is attached to the support portion 23a, and the magnet portion 27b is attached to the pedestal portion 23b. The magnetic field generation unit 27a may be attached to the pedestal portion 23b, and the magnet portion 27b may be attached to the support portion 23a.

The magnetic field generation unit 27a is, for example, a coil. A current is supplied to the magnetic field generation unit 27a so that at magnetic field is generated. A repulsive force or an attractive force is generated between the magnetic field generation unit 27a and the magnet portion 27b by a magnetic field generated by the magnetic field generation unit 27a and a magnetic field generated by the magnet portion 27b. Due to this repulsive force or attractive force, the magnet portion 27b is displaced with respect to the magnetic field generation unit 27a. Accordingly, the linear motor 27 displaces the pedestal portion 23b to which the magnet portion 27b is attached, with respect to the support portion 23a to which the magnetic field generation unit 27a is attached. Thus, the pedestal drive unit 23d can drive the pedestal portion 23b in a noncontact state without bringing the support portion 23a and the pedestal portion 23b into direct contact with each other.

The plurality of linear motors 27 include, for example, a linear motor 27 that can displace the pedestal portion 23b with respect to the support portion 23a in the central axis direction, and a linear motor 27 that can displace the pedestal portion 23b with respect to the support portion 23a in a direction perpendicular to the central axis direction.

The adapter 23 may have any configuration as long as the adapter 23 can attach the end effector 22 to the robot arm 21. As a configuration of the adapter 23, for example, a configuration of an adapter described in International Application No. PCT/JP2019/016043 may be adopted.

As illustrated in FIG. 3, a plurality of imaging devices 30 are provided in the present embodiment. For the imaging device 30, for example, two imaging devices including a first imaging device 31 and a second imaging device 32 are provided. The first imaging device 31 and the second imaging device 32 may be, for example, RGB cameras or infrared cameras. A stereo camera is configured of the first imaging device 31 and the second imaging device 32. In the present embodiment, the first imaging device 31 and the second imaging device 32 are attached to the end effector 22. The first imaging device 31 and the second imaging device 32 are disposed around the end effector 22.
The first imaging device 31 and the second imaging device 32 are located, for example, radially outward of the base portion 22a and disposed in the circumferential direction.

In the present embodiment, an optical axis AX1 of the first imaging device 31 and an optical axis AX2 of the second imaging device 32 are parallel to each other. The optical axes AX1 and AX2 are parallel to the central axis CL, for example. In the present specification, "the optical axes of the plurality of imaging devices are parallel to each other" includes a case in which the optical axes of the plurality of imaging devices are substantially parallel to each other, in addition to a case in which the optical axes of the plurality of imaging devices are strictly parallel to each other. The case in which the optical axes of the plurality of imaging devices are substantially parallel to each other includes, for example, a case in which the optical axes of the plurality of imaging devices are tilted with respect to each other within 5°.

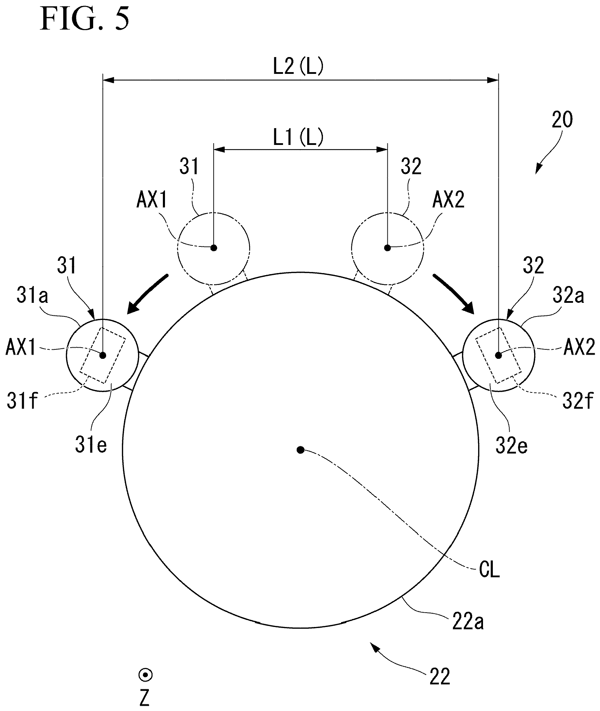

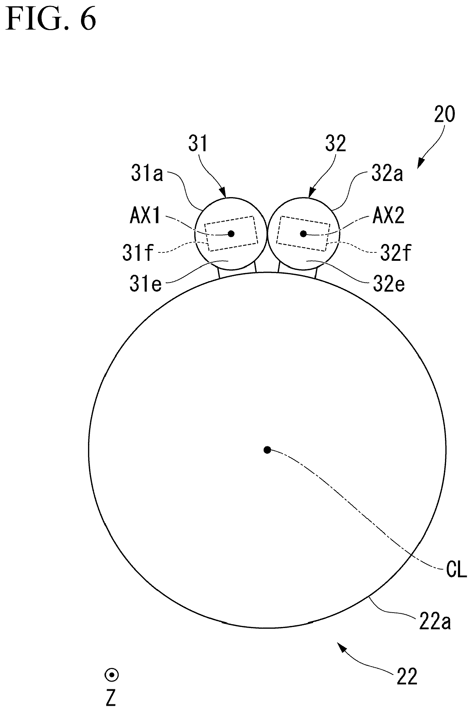

FIG. 5 is a view of a portion of the end effector 22, the first imaging device 31, and the second imaging device 32 viewed from the distal end side (+Z side) in the central axis direction. FIG. 6 is a view of a portion of the end effector 22, the first imaging device 31, and the second imaging device 32 viewed from the distal end side (+Z side) in the central axis direction, and is a view which illustrates a case in which the first imaging device 31 and the second imaging device 32 are located in predetermined initial positions. In FIGS. 5 and 6, illustration of the finger portion 22b of the end effector 22 and the camera unit 60 is omitted.

At least one of the first imaging device 31 and the second imaging device 32 is movable with respect to the end effector 22, as illustrated in FIGS. 5 and 6. In the present embodiment, both the first imaging device 31 and the second imaging device 32 are movable with respect to the end effector 22. Relative positions of the first imaging device 31 and the second imaging device 32 are variable. In the present embodiment, at least one of the first imaging device 31 and the second imaging device 32 is movable in a predetermined circumferential direction around the end effector 22. In the present embodiment, the "predetermined circumferential direction" is the circumferential direction around the central axis CL around the base portion 22a.

In the present embodiment, both the first imaging device 31 and the second imaging device 32 are movable in the predetermined circumferential direction around the end effector 22. That is, in the present embodiment, one of the first imaging device 31 and the second imaging device 32 is movable in the predetermined circumferential direction around the end effector 22, and the other is also movable in the predetermined circumferential direction around the end effector 22. As illustrated in FIG. 6, in the present embodiment, the first imaging device 31 and the second imaging device 32 can comes into contact with each other in the circumferential direction. In the present embodiment, the first imaging device 31 and the second imaging device 32 come in contact with each other in the circumferential direction when the first imaging device 31 and the second imaging device 32 are located at the initial positions illustrated in FIG. 6.

As illustrated in FIG. 3, the first imaging device 31 includes a housing 31a, a first drive unit 31b, a first position acquisition unit 31c, a lens 31e, and an image sensor 31f. The housing 31a has, for example, a cylindrical shape that has an opening on a distal end side (+Z side) and extends in the central axis direction. The central axis of the housing 31a matches the optical axis AX1 of the first imaging device 31, for example. The housing 31a is attached to the base portion 22a of the end effector 22 via a slider 31d.

The slider 31d is fixed, for example, to a radially inner side portion in a portion on the proximal end side (-Z side) of the housing 31a. The slider 31d connects the housing 31a to the base portion 22a of the end effector 22. That is, in the present embodiment, the first imaging device 31 is connected to the end effector 22 via the slider 31d. The slider 31d is connected to the guide rail portion 22e of the end effector 22. The slider 31d can move in the circumferential direction along the guide rail portion 22e. This makes it possible for the first imaging device 31 to be movable in the circumferential direction along the guide rail portion 22e.

The lens 31e is fitted into the opening on the distal end side (+Z side) of the housing 31a. The lens 31e is, for example, a circular lens when viewed in the central axis direction. The optical axis AX1 of the first imaging device 31 passes through a center of the lens 31e.

The image sensor 31f is disposed inside the housing 31a. The image sensor 31f is, for example, a CCD image sensor or a CMOS image sensor. Light incident on the inside of the housing 31a is incident on the image sensor 31f through the lens 31e. The image sensor 31f converts the incident optical signal into an analog electrical signal, converts the converted analog electrical signal into a digital image signal, and outputs the digital image signal.

As illustrated in FIG. 5, the image sensor 31f has a rectangular shape when viewed in the central axis direction. When viewed in the central axis direction, a long side of the image sensor 31f is perpendicular to a direction passing through the optical axis AX1 of the first imaging device 31 in a radial direction. In the present embodiment, the first imaging device 31 is movable in the circumferential direction so that a state in which the long side of the image sensor 31f is perpendicular to the radial direction passing through the optical axis AX1 of the first imaging device 31 when viewed in the central axis direction is maintained.

As illustrated in FIG. 3, the first drive unit 31b is disposed inside the housing 31a, for example. The first drive unit 31b is, for example, a servomotor. The first drive unit 3 1b moves the first imaging device 31 in the circumferential direction around the end effector 22. In the present embodiment, the entire first imaging device 31, including the first drive unit 3 1b, moves in the circumferential direction together with the slider 31d.

The first position acquisition unit 31c is disposed inside the housing 31a, for example. The first position acquisition unit 31c is, for example, a rotary encoder. The first position acquisition unit 31c can detect rotation of the first drive unit 31b to acquire position information in the circumferential direction of the first imaging device 31. The first position acquisition unit 31c detects a rotation speed of the first drive unit 31b, for example, with the rotation speed of the first drive unit 3 1b when the first imaging device 31 is located at the initial position illustrated in FIG. 6 set to zero, to detect a position in the circumferential direction of the first imaging device 31.

The second imaging device 32 includes a housing 32a, a second drive unit 32b, a second position acquisition unit 32c, a lens 32e, and an image sensor 32f. The housing 32a includes, for example, a cylindrical shape that has the opening on a distal end side (+Z side) and extends in the central axis direction. A central axis of the housing 32a matches the optical axis AX2 of the second imaging device 32, for example. The housing 32a is attached to the base portion 22a of the end effector 22 via a slider 32d.

The slider 32d is fixed, for example, to a radially inner portion on the proximal end side (-Z side) of the housing 32a. The slider 32d connects the housing 32a and the base portion 22a of the end effector 22. That is, in the present embodiment, the second imaging device 32 is connected to the end effector 22 via the slider 32d. The slider 32d is connected to the guide rail portion 22e of the end effector 22. The slider 32d can move in the circumferential direction along the guide rail portion 22e. This makes it possible for the second imaging device 32 to move in the circumferential direction along the guide rail portion 22e.

Thus, in the present embodiment, the guide rail portion 22e corresponds to a first holding portion that holds the first imaging device 31 and corresponds to a second holding portion that holds the second imaging device 32. That is, in the present embodiment, the end effector 22 includes the guide rail portion 22e as a first holding portion holding the first imaging device 31 and a second holding portion holding the second imaging device 32. In the present embodiment, the first imaging device 31 is held to be movable by the guide rail portion 22e serving as the first holding portion, and the second imaging device 32 is held to be movable by the guide rail portion 22e serving as the second holding portion.

The lens 32e is fitted into an opening on the distal end side (+Z side) of the housing 32a. The lens 32e is, for example, a circular lens when viewed in the central axis direction. The optical axis AX2 of the second imaging device 32 passes through a center of the lens 32e.

The image sensor 32f is disposed inside the housing 32a. The image sensor 32f is, for example, a CCD image sensor or a CMOS image sensor. Light incident on the inside of the housing 32a is incident on the image sensor 32f through the lens 32e. The image sensor 32f converts an incident optical signal into an analog electrical signal, converts the converted analog electrical signal into a digital image signal, and outputs the digital image signal.

As illustrated in FIG. 5, the image sensor 32f has a rectangular shape when viewed in a central axis direction. When viewed in the central axis direction, a long side of the image sensor 32f is perpendicular to a direction passing through the optical axis AX2 of the second imaging device 32 in a radial direction. In the present embodiment, the second imaging device 32 is movable in a circumferential direction so that a state in which the long side of the image sensor 32f is perpendicular to the radial direction passing through the optical axis AX2 of the second imaging device 32 when viewed in the central axis direction is maintained. The image sensor 32f has the same shape and size as the image sensor 31f of the first imaging device 31, for example.

In the present specification, a "long side of the image sensor" is a long side in a rectangular area of the image sensor on which light is incident. For the image sensors 31f and 32f illustrated in each figure, only a body portion having the rectangular area on which the light is incident is illustrated. The image sensors 31f and 32f may include portions other than the body portion, such as a frame portion that holds the body portion on which the light is incident. In this case, even when the image sensors 31f and 32f have an external shape other than a rectangle when viewed in a direction of the optical axes AX1 and AX2, the long sides of the image sensors 31f and 32f are the long sides of the rectangular area on which the light is incident in the image sensors 31f and 32f.

As illustrated in FIG. 3, the second drive unit 32b is disposed inside the housing 32a, for example. The second drive unit 32b is, for example, a servomotor. The second drive unit 32b moves the second imaging device 32 in the circumferential direction around the end effector 22. In the present embodiment, the entire second imaging device 32, including the second drive unit 32b, moves in the circumferential direction together with the slider 32d.

In the present embodiment, a drive unit 33 that drives the imaging device 30 is configured of the first drive unit 31b and the second drive unit 32b. The drive unit 33 can move at least one of the first imaging device 31 and the second imaging device 32 with respect to the end effector 22. In the present embodiment, the drive unit 33 can move both the first imaging device 31 and the second imaging device 32 with respect to the end effector 22 using respective drive unit provided in the respective imaging devices 30.

The second position acquisition unit 32c is disposed inside the housing 32a, for example. The second position acquisition unit 32c is, for example, a rotary encoder. The second position acquisition unit 32c can detect rotation of the second drive unit 32b to acquire position information in the circumferential direction of the second imaging device 32. The second position acquisition unit 32c detects a rotation speed of the second drive unit 32b, for example, with the rotation speed of the second drive unit 32b when the second imaging device 32 is located at the initial position illustrated in FIG. 6 set to zero, to detect the position in the circumferential direction of the second imaging device 32.

In the present embodiment, a position acquisition unit 34 that acquires at least position information of the first imaging device 31 is configured of the first position acquisition unit 31c and the second position acquisition unit 32c. In the present embodiment, the position acquisition unit 34 can acquire both the position information of the first imaging device 31 and position information of the second imaging device 32 using each position acquisition unit provided in each imaging device 30. The position acquisition unit 34 can acquire, for example, the position in the circumferential direction of the first imaging device 31 and the position in the circumferential direction of the second imaging device 32.

Each imaging device 30 includes a memory 35 and a digital signal processing unit 36, as illustrated in FIG. 2. The digital signal processing unit 36 performs image processing such as digital amplification, color interpolation processing, and white balance processing on the digital image signal output from the image sensor of each imaging device 30. The digital image signal processed by the digital signal processing unit 36 may be temporarily stored in the memory 35 or may be output to the control unit 40 without being stored in the memory 35. The digital image signal output from the digital signal processing unit 36 to the control unit 40 is output to the distance information acquisition unit 44, which will be described below.

The memory 35 can store the digital image signal output from the image sensor of each imaging device 30 and the digital image signal output from the digital signal processing unit 36. The memory 35 is, for example, a volatile memory. The memory 35 may be a non-volatile memory. The digital image signal output from the image sensor of each imaging device 30 is, for example, stored in the memory 35, sent from the memory 35 to the digital signal processing unit 36, and subjected to image processing in the digital signal processing unit 36.

In the above description, one memory 35 and one digital signal processing unit 36 are provided inside each imaging device 30, but the present invention is not limited thereto. One memory 35 and one digital signal processing unit 36 may be provided for each of the two imaging devices 30, and used for both the image sensor 31f of the first imaging device 31 and the image sensor 32f of the second imaging device 32. Further, some or both of the memory 35 and the digital signal processing unit 36 may be provided outside the imaging device 30, such as the control unit 40.

The control unit 40 controls the robot system 10. As illustrated in FIG. 2, in the present embodiment, the control unit 40 includes an arm control unit 41, an end effector control unit 42, an imaging device control unit 43 and the distance information acquisition unit 44. Each of the arm control unit 41, the end effector control unit 42, an imaging device control unit 43, and the distance information acquisition unit 44 may be realized by dedicated hardware, or may be realized by a memory and a microprocessor.

The arm control unit 41 controls the arm drive unit 25. In the present embodiment, the arm control unit 41 receives information on position and posture of the arm portion 24 from the arm position acquisition unit 26 and also receives the information on the distance to the target object W from the distance information acquisition unit 44. In the present embodiment, the arm control unit 41 controls the arm drive unit 25 on the basis of information on the position and posture of the arm portion 24 and the information on the distance to the target object W. More specifically, the arm control unit 41, for example, calculates target values of the position and posture of the arm portion 24 on the basis of the information on the distance to the target object W, and controls the arm drive unit 25 so that the position and posture of the arm portion 24 become the target values through feedback control using the information from the arm position acquisition unit 26. Thus, the control unit 40 controls the arm drive unit 25 with the arm control unit 41 to control at least one of the position and the posture of the robot arm 21. The target values of the position and posture of the arm portion 24 may be input to the arm control unit 41 from the outside.

The end effector control unit 42 controls the end effector drive unit 28. In the present embodiment, the end effector control unit 42 receives information on position and posture of the end effector 22 from the end effector position acquisition unit 29, and also receives the information on the distance to the target object W from the distance information acquisition unit 44. In the present embodiment, the end effector control unit 42 controls the end effector drive unit 28 on the basis of the information on the position and posture of the end effector 22 and the information on the distance to the target object W. More specifically, the end effector control unit 42 calculates target values of the position and posture of the end effector 22 on the basis of the information on the distance to the target object W, and controls the end effector drive unit 28 so that the position and posture of the end effector 22 become the target values through feedback control using information from the end effector position acquisition unit 29. Thus, the control unit 40 controls the end effector drive unit 28 using the end effector control unit 42 to control at least one of the position and posture of the end effector 22. The target values of the position and posture of the end effector 22 may be input to the end effector control unit 42 from the outside.

The imaging device control unit 43 controls the drive unit 33 of the imaging device 30. In the present embodiment, information on the position of the imaging device 30 is input to the imaging device control unit 43 from the position acquisition unit 34 of the imaging device 30. More specifically, the imaging device control unit 43 receives the position information of the first imaging device 31 in the circumferential direction from the first position acquisition unit 31c, and also receives the position information of the second imaging device 32 in the circumferential direction from the second position acquisition unit 32c. Further, the information on the distance to the target object W is input from the distance information acquisition unit 44 to the imaging device control unit 43. The imaging device control unit 43, for example, controls the first drive unit 31b and the second drive unit 32b on the basis of the position information of the imaging device 30 input from the position acquisition unit 34 and the information on the distance to the target object W input from the distance information acquisition unit 44. Accordingly, the control unit 40 controls the drive unit 33 using the imaging device control unit 43 to control the position of the imaging device 30.

The imaging device control unit 43 can change a baseline length L that is a distance between the first imaging device 31 and the second imaging device 32. As illustrated in FIG. 5, the baseline length L is a distance between the optical axis AX1 of the first imaging device 31 and the optical axis AX2 of the second imaging device 32. For example, when the first imaging device 31 and the second imaging device 32 are moved to be away from each other in the circumferential direction from a position indicated by a two-dot chain line to a position indicated by a solid line in FIG. 5, the baseline length L can be changed from a baseline length L1 to a baseline length L2 larger than the baseline length L1. Thus, the baseline length L between the first imaging device 31 and the second imaging device 32 can be increased. On the other hand, when the first imaging device 31 and the second imaging device 32 are moved to approach each other in the circumferential direction, the baseline length L between the first imaging device 31 and the second imaging device 32 can be reduced. Thus, in the present embodiment, the control unit 40 controls the drive unit 33 of the imaging device 30 using the imaging device control unit 43 to be able to change the baseline length L, which is the distance between the first imaging device 31 and the second imaging device 32.

The imaging device control unit 43 calculates a target value of the baseline length L to be changed, on the basis of the information on the distance to the target object W, for example. When the distance from the imaging device 30 to the target object W is relatively large, the imaging device control unit 43 makes the baseline length L relatively large. On the other hand, when the distance from the imaging device 30 to the target object W is relatively small, the imaging device control unit 43 makes the baseline length L relatively small. The target value of the baseline length L may be input to the imaging device control unit 43 from the outside. The target value of the baseline length L may be input from the distance information acquisition unit 44 to the imaging device control unit 43.

In the present embodiment, the control unit 40 changes the baseline length L according to work content of the robot system 10 using the imaging device control unit 43. For example, when the target object W on the workbench WB is searched for, the control unit 40 makes the baseline length L relatively large. On the other hand, for example, when the end effector 22 is brought closer to the target object W on which work is performed after the target object W is found, the control unit 40 makes the baseline length L relatively small. In this case, the control unit 40 may reduce the baseline length L as the end effector 22 approaches the target object W.

In the present embodiment, the imaging device control unit 43 controls the drive unit 33 to move the imaging device 30 to the predetermined initial position after the robot system 10 is powered on. For example, after the robot system 10 is powered on, the imaging device control unit 43 moves the first imaging device 31 to the predetermined initial position illustrated in FIG. 6 and moves the second imaging device 32 to the predetermined initial position illustrated in FIG. 6. The movement of the first imaging device 31 and the second imaging device 32 to respective initial positions is performed, for example, after the robot system 10 is powered on and before the first imaging device 31 and the second imaging device 32 are used. The movement of the first imaging device 31 and the second imaging device 32 to respective initial positions may be performed, for example, immediately after the robot system 10 is powered on.

The imaging device control unit 43, for example, brings the first imaging device 31 and the second imaging device 32 into contact with each other in the circumferential direction and preferably and easily moves each of the first imaging device 31 and the second imaging device 32 to the initial position. The robot system 10 may include a sensor capable of detecting contact between the first imaging device 31 and the second imaging device 32 in the circumferential direction.

Thus, in the present embodiment, at least the first imaging device 31 moves to the predetermined initial position after the robot system 10 is powered on. More specifically, both the first imaging device 31 and the second imaging device 32 move to the predetermined initial positions after the robot system 10 is powered on. Only the first imaging device 31 between the first imaging device 31 and the second imaging device 32 may move to the predetermined initial position after the robot system 10 is powered on, and only the second imaging device 32 between the first imaging device 31 and the second imaging device 32 may move to the predetermined initial position after the robot system 10 is powered on.

In the present embodiment, when the control unit 40 moves the first imaging device 31 and the second imaging device 32 using the imaging device control unit 43, the control unit 40 stops the member to which the imaging device 30 is attached, that is, the end effector 22 in the present embodiment. That is, in the present embodiment, the movement of the first imaging device 31 and the movement of the second imaging device 32 are performed in a state in which the members to which the first imaging device 31 and the second imaging device 32 are attached are stationary. In the present embodiment, the movement of the first imaging device 31 to the predetermined initial position and the movement of the second imaging device 32 to the predetermined initial position are also performed in a state in which the member (the end effector 22) to which the first imaging device 31 and the second imaging device 32 are attached is stationary.

When at least one of the first imaging device 31 and the second imaging device 32 cannot image the target object W, the control unit 40 may move the at least one of the first imaging device 31 and the second imaging device 32 so that both the first imaging device 31 and the second imaging device 32 are located to be able to image the target object W. A case in which the target object W cannot be imaged by the imaging device 30 is, for example, a case in which an obstacle is disposed between the imaging device 30 and the target object W and the target object W is not captured by the imaging device 30. The control unit 40 may move the first imaging device 31 and the second imaging device 32 to positions at which the work of the end effector 22 are not hindered, depending on the work of the target object W by the end effector 22.

The distance information acquisition unit 44 acquires the information on the distance to the target object W. The information on the distance to the target object W includes, for example, the distance from the imaging device 30 to the target object W, a distance from the end effector 22 to the target object W, a distance from the robot arm 21 to the target object W, distances between a plurality of target objects W, 3D point cloud data for the target object W, and the like.
The distance information acquisition unit 44 receives information of images captured by the image sensors 31f and 32f.

The information on the position of the imaging device 30 is input to the distance information acquisition unit 44 from the position acquisition unit 34 of the imaging device 30. The distance information acquisition unit 44 acquires the baseline length L on the basis of the position information of the first imaging device 31 acquired by the position acquisition unit 34. In the present embodiment, the distance information acquisition unit 44 acquires the baseline length L on the basis of the position information of the first imaging device 31 acquired by the first position acquisition unit 31c and the position information of the second imaging device 32 acquired by the second position acquisition unit 32c. Specifically, the distance information acquisition unit 44 calculates a distance between the optical axis AX1 of the first imaging device 31 and the optical axis AX2 of the second imaging device 32 from the position in the circumferential direction of the first imaging device 31 and the position in the circumferential direction of the second imaging device 32 and acquires the baseline length L. The distance information acquisition unit 44 may acquire the baseline length L from another portion such as the imaging device control unit 43, for example.

The distance information acquisition unit 44 acquires the information on the distance to the target object W on the basis of the acquired baseline length L, the first image acquired by the first imaging device 31, and the second image acquired by the second imaging device 32. Here, in the present embodiment, the posture of the image sensor 31f of the first imaging device 31 and the posture of the image sensor 32f of the second imaging device 32 are different from each other when viewed in the central axis direction. Therefore, the distance information acquisition unit 44 rotates at least one of the first image acquired by the first imaging device 31 and the second image acquired by the second imaging device 32 to align the direction (orientation) of the first image with the direction (orientation) of the second image.

Thus, in the present embodiment, the distance information acquisition unit 44 rotates the at least one of the first image acquired by the first imaging device 31 and the second image acquired by the second imaging device 32 to adjust the direction of the acquired image. The distance information acquisition unit 44 may rotate only the first image acquired by the first imaging device 31 to align the direction of the first image with the direction of the second image, may rotate only the second image acquired by the second imaging device 32 to align the direction of the second image with the direction of the first image, or may rotate both the first image acquired by the first imaging device 31 and the second image acquired by the second imaging device 32 to align the direction of the first image with the direction of the second image. In the present embodiment, the distance information acquisition unit 44 measures the distance from the imaging device 30 to the target object W using the baseline length L and the first image and the second image whose directions are aligned through the rotation. The control unit 40 controls at least one of the robot arm 21 and the end effector 22 on the basis of the information on the distance to the target object W that has been acquired in this way.

The display unit 50 displays information based on the information on the distance. The information on the distance includes, for example, the information on the distance to the target object W, and information on the baseline length L, which is the distance between the first imaging device 31 and the second imaging device 32. The information based on the information on the distance may be the information on the distance itself or may be information obtained from the information on the distance. For example, a current distance to the target object W and the current baseline length L may be displayed on the display unit 50. For example, the display unit 50 may display changes in the distance to the target object W and the baseline length L in a graph form. The display unit 50 may have any structure as long as the display unit 50 can display the information based on the information on the distance. The display unit 50 may be provided separately from the robot 20 or may be provided on the robot arm 21, for example. The display unit 50 is controlled by the control unit 40.

According to the present embodiment, at least one of the first imaging device 31 and the second imaging device 32 attached to the end effector 22 is movable with respect to the end effector 22. Therefore, at least one of the first imaging device 31 and the second imaging device 32 is moved so that the distance between the first imaging device 31 and the second imaging device 32 can be changed. Accordingly, the baseline length L, which is the distance between the first imaging device 31 and the second imaging device 32, can be changed.

Here, when the baseline length L is relatively large, a resolution for the target object W relatively far from the imaging device 30 can be made relatively high, and the distance to the target object W relatively far from the imaging device 30 can be accurately detected. However, in this case, since the target object W relatively close to the imaging device 30 is not captured by the imaging device 30, a distance to the target object W relatively close to the imaging device 30 cannot be detected. On the other hand, when the baseline length L is relatively small, the target object W relatively close to the imaging device 30 can be imaged, but it is difficult to focus on the target object W relatively far from the imaging device 30, and to accurately detect the distance to the target object W relatively far from the imaging device 30.
Thus, a position of the target object W to which the distance can be preferably detected differs depending on a magnitude of the baseline length L. Therefore, for example, in an imaging device whose magnitude of the baseline length L is fixed, a position of the target object W with respect to the imaging device at which the information on the distance can be preferably acquired is limited. Accordingly, when only the imaging device is used, work content of the robot system may be limited.

On the other hand, according to the present embodiment, the baseline length L between the first imaging device 31 and the second imaging device 32 attached to the end effector 22 can be changed as described above. Therefore, when a distance between the end effector 22 and the target object W is relatively large, the baseline length L is made relatively large, and when the distance between the end effector 22 and the target object W is relatively small, the baseline length L is made to relatively small, making it possible to accurately measure the distance to the target object W with only the imaging device 30 attached to the end effector 22 even when the distance between the end effector 22 and the target object W changes greatly to some extent. Further, when the distance between the end effector 22 and the target object W is relatively large, the baseline length L can be made relatively large, making it possible to detect the distance to the target object W more accurately through stereo matching. Further, when the distance between the end effector 22 and the target object W is relatively small, the baseline length L can be made relatively small, making it possible to increase a degree of overlapping (an overlapping portion) between the image captured by the first imaging device 31 and the image captured by the second imaging device 32, and to perform stereo matching within a relatively wide range in the image captured by each imaging device 30 to measure the distance to the target object W. This makes it possible to perform work on the target object W with the robot system 10 regardless of the distance between the end effector 22 and the target object W. Therefore, it is possible to suppress work content of the robot system 10 being restricted. This makes it possible to improve workability for the target object W.

Specifically, for example, it is possible to perform a work of searching the workbench WB from a relatively long distance to find the target object W, a work of bringing the end effector 22 closer to the target object W that has been searched for, a work of gripping the target object W with the end effector 22, a work of moving the gripped target object W to another place, and the like by using only the first imaging device 31 and the second imaging device 32 attached to the end effector 22 while preferably acquiring the distance to the target object W.

Further, for example, when a facility capable of measuring the distance to the target object W on which the robot system performs work is provided on a ceiling of a place at which the robot system is disposed, or the like, a baseline length L in the facility can be made different from the baseline length L of the imaging device attached to the end effector, making it possible to perform the work using the robot system while ascertaining the distance to the target object even when the distance between the end effector and the target object changes in a somewhat wide range. However, in this case, there is a problem that a cost for providing the facility is required. Further, there is a problem that the robot system can only be used at the place at which the facility is provided.

On the other hand, according to the present embodiment, since the baseline length L between the first imaging device 31 and the second imaging device 32 attached to the end effector 22 can be changed, the robot system 10 can perform work on the target object W without providing the facility provided on the ceiling or the like described above even when the distance between the end effector 22 and the target object W changes in the somewhat wide range. This eliminates the cost of providing the facility. Further, the robot system 10 can be used even in places at which the above facility is not provided. Therefore, a degree of freedom of a place at which the robot system 10 can be used can be improved.

Further, when either the first imaging device 31 or the second imaging device 32 is at a position at which the target object W cannot be imaged, the first imaging device 31 or the second imaging device 32 is moved with respect to the end effector 22, making it easy to image the target object W using both the first imaging device 31 and the second imaging device 32 without moving the end effector 22. This makes it possible to preferably acquire the information on the distance to the target object W regardless of for example, the position and posture of the end effector 22.

Further, it is possible to move the position of at least one of the first imaging device 31 and the second imaging device 32 to a preferred position depending on a path along which the robot arm 21 and the end effector 22 move, a surrounding environment in which the robot arm 21 and the end effector 22 are disposed, or the like. For example, when the robot arm 21 and the end effector 22 are moved with respect to the target object W, it is possible to move the first imaging device 31 and the second imaging device 32 so that the first imaging device 31 and the second imaging device 32 do not come into contact with other objects or the like. Therefore, a freedom of movement of the robot arm 21 and the end effector 22 can be improved.

Further, for example, it is possible to move at least one of the first imaging device 31 and the second imaging device 32 to optimize inertia when the robot 20 moves. Specifically, for example, when the end effector 22 does not grip the target object W, the first imaging device 31 and the second imaging device 32 are disposed on opposite sides with the central axis CL therebetween, making it easy to minimize overall inertia of the end effector 22, the first imaging device 31, and the second imaging device 32. This makes it easy to preferably move the end effector 22 to which the first imaging device 31 and the second imaging device 32 are attached. Further, for example, when the end effector 22 is gripping the target object W, it is possible to move at least one of the first imaging device 31 and the second imaging device 32 to a position at which the first imaging device 31 and the second imaging device 32 function as counterweights for the gripped target object W. This makes it easy to minimize the overall inertia of the end effector 22, the first imaging device 31, the second imaging device 32, and the target object W. Therefore, it is possible to make it easy to preferably move the end effector 22 in a state in which the end effector 22 grips the target object W.

Further, when the distance between the target object W and the first imaging device 31 and the second imaging device 32 changes within a range in which the target object W can be imaged by the first imaging device 31 and the second imaging device 32, the baseline length L may be increased as the first imaging device 31 and the second imaging device 32 approach the target object W. Here, the detection accuracy of the distance to the target object W can be improved as the baseline length L increases. Therefore, when the target object W is within the range in which the target object W can be imaged, the baseline length L is increased as the imaging device approaches the target object W, making it possible to acquire the distance to the target object W more accurately and easy to perform precision work on the target object W.

For example, when the end effector 22 is a robot hand that grips the target object W or when the end effector 22 is a tool that perform work on the target object W, the distance to target object W can be accurately acquired as the end effector 22 is closer to the target object W, making it easy for the end effector 22 to perform precise work on the target object W. Further, when the end effector 22 is relatively far from the target object W, the baseline length L is relatively small, and thus, an overlapping area (the overlapping portion) between the image captured by the first imaging device 31 and the image captured by the second imaging device 32 is increased, and the distance can be measured within a relatively wide range including the target object W.

Further, according to the present embodiment, the optical axis AX1 of the first imaging device 31 and the optical axis AX2 of the second imaging device 32 are parallel to each other. Therefore, it is easy to preferably acquire the distance to the target object W on the basis of the first image acquired by the first imaging device 31 and the second image acquired by the second imaging device 32.

Further, according to the present embodiment, the control unit 40 that controls the robot system 10 can change the baseline length L, which is the distance between the first imaging device 31 and the second imaging device 32, and the distance information acquisition unit 44 can acquire the information on the distance to the target object W on the basis of the baseline length L. Therefore, it is possible to easily change the baseline length L depending on work content of the robot system 10. Further, the information on the distance to the target object W can be easily acquired by the distance information acquisition unit 44.

Further, according to the present embodiment, the position acquisition unit 34 that acquires the position information of at least the first imaging device 31 is provided, and the distance information acquisition unit 44 acquires the baseline length L on the basis of the position information of the first imaging device 31 acquired by the position acquisition unit 34. Therefore, the distance information acquisition unit 44 can preferably acquire the information on the distance to the target object W on the basis of the acquired baseline length L while preferably acquiring the baseline length L.

Further, according to the present embodiment, the control unit 40 changes the baseline length L depending on work content of the robot system 10. Therefore, it is possible to preferably change the baseline length L between the first imaging device 31 and the second imaging device 32 depending on work content of the robot system 10. This makes it possible to preferably perform the work with the robot system 10. Specifically, for example, when work for searching for the target object W from a relatively long distance is performed, the baseline length L is made relatively large, making it possible to accurately acquire the distance to the target object W, which is relatively far away, and easy to search for the target object W. Further, for example, when the end effector 22 performs work for gripping the target object W, the baseline length L is made relatively small, making it possible to acquire the distance to the target object W, which is relatively small, and easy to preferably grip the target object W with the end effector 22.

Further, according to the present embodiment, the distance information acquisition unit 44 rotates the at least one of the first image acquired by the first imaging device 31 and the second image acquired by the second imaging device 32 to adjust the direction of the acquired image. Therefore, even when the image sensor 31f of the first imaging device 31 and the image sensor 32f of the second imaging device 32 are disposed in different postures, it is possible to align the direction of the first image acquired by the first imaging device 31 with the direction of the second image acquired by the second imaging device 32. This makes it possible to preferably acquire the information on the distance to the target object W using the distance information acquisition unit 44 on the basis of the images acquired by each imaging device 30 regardless of a relative position and relative posture of the first imaging device 31 and the second imaging device 32. Therefore, even when the at least one of the first imaging device 31 and the second imaging device 32 is moved so that the first imaging device 31 and the second imaging device 32 are at arbitrary positions and postures, it is possible to preferably acquire the information on the distance to the target object W.

Further, according to the present embodiment, the first imaging device 31 and the second imaging device 32 are disposed around the end effector 22. Therefore, it is easy to measure the distance between the end effector 22 and the target object W from the images captured by the first imaging device 31 and the second imaging device 32. Further, for example, the first imaging device 31 and the second imaging device 32 are disposed radially outward of the base portion 22a as in the present embodiment, making it difficult for the first imaging device 31 and the second imaging device 32 to hinder work of gripping the target object W by the end effector 22.

Further, according to the present embodiment, at least one of the first imaging device 31 and the second imaging device 32 is movable in the predetermined circumferential direction around the end effector 22. Therefore, at least one of the first imaging device 31 and the second imaging device 32 is moved so that a distance in the circumferential direction between the first imaging device 31 and the second imaging device 32 can be changed and the baseline length L between the first imaging device 31 and the second imaging device 32 can be easily changed.

Further, according to the present embodiment, at least the first imaging device 31 moves to the predetermined initial position after the robot system 10 is powered on. This makes it possible to perform calibration of the first position acquisition unit 31c in the first imaging device 31 before the first imaging device 31 is used. Accordingly, even when the first imaging device 31 is moved, it is possible to accurately detect a position of the first imaging device 31 with the predetermined initial position as a reference. In the present embodiment, both the first imaging device 31 and the second imaging device 32 move to the predetermined initial positions after the robot system 10 is powered on. Therefore, it is possible to calibrate each position detection unit of each imaging device 30, and to accurately detect the position of each imaging device 30. This makes it possible to accurately change the baseline length L between the first imaging device 31 and the second imaging device 32, and to acquire the information on the distance to the target object W more preferably on the basis of the baseline length L. Further, in the present embodiment, the first imaging device 31 and the second imaging device 32 come into contact with each other in the circumferential direction, making it possible to easily move the first imaging device 31 and the second imaging device 32 to the initial positions.

Further, according to the present embodiment, the movement of the first imaging device 31 to the predetermined initial position is performed in a state in which the member to which the first imaging device 31 is attached, that is, the end effector 22 in the present embodiment is stationary. Therefore, it is easier to move the first imaging device 31 as compared with a case in which the first imaging device 31 is moved to the initial position while the end effector 22 is moving. Further, since it is possible to suppress the movement of the first imaging device 31 while the end effector 22 is moving, it is possible to suppress the complication of the calculation of the movement of the end effector 22 and the calculation of the movement of the robot arm 21. In the present embodiment, the movement of the second imaging device 32 to the predetermined initial position is also performed in a state in which the end effector 22 is stationary. This makes it easy to move the second imaging device 32 to the initial position. Further, since it is possible to suppress the movement of the second imaging device 32 while the end effector 22 is moving, it is possible to further suppress the complication of the calculation of the movement of the end effector 22 and the calculation of the movement of the robot arm 21.

In the present embodiment, the movement of the first imaging device 31 with respect to the end effector 22 and the movement of the second imaging device 32 with respect to the end effector 22 are both performed in a state in which the member to which the first imaging device 31 and the second imaging device 32 are attached, that is, the end effector 22 in the present embodiment is stationary. Therefore, the first imaging device 31 and the second imaging device 32 do not move relative to the end effector 22 while the end effector 22 is moving. This makes it possible to further suppress the complication of the calculation of the movement of the end effector 22 and the calculation of the movement of the robot arm 21.

Further, according to the present embodiment, the display unit 50 that displays the information based on the information on the distance is provided. Therefore, an operator or the like of the robot system 10 can easily acquire the information on the distance by viewing the display unit 50.

In the above-described description, a method of rotating the at least one of the first image acquired by the first imaging device 31 and the second image acquired by the second imaging device 32 to adjust the direction of the acquired image has been adopted, but the present invention is not limited thereto. In the present embodiment, the control unit 40 may rotate at least one of the image sensor 31f of the first imaging device 31 and the image sensor 32f of the second imaging device 32 to adjust the direction of the acquired image. In this case, the control unit 40 rotates at least one of the image sensor 31f of the first imaging device 31 and the image sensor 32f of the second imaging device 32 so that the long side of the image sensor 31f and the long side of the image sensor 32f are parallel, for example. This makes it possible to align the directions of the images acquired by the respective imaging devices 30 without performing processing such as rotation on the captured image. Therefore, the load of image processing in the control unit 40 can be reduced as compared with a case in which the processing such as rotation is performed on the acquired image.

When the control unit 40 rotates the image sensor 31f of the first imaging device 31, the control unit 40 may rotate the entire first imaging device 31 for each the image sensor 31f, or may rotate only the image sensor 31f of the first imaging device 31. When the control unit 40 rotates the image sensor 31f of the first imaging device 31, the control unit 40 rotates the image sensor 31f around the optical axis AX1. In this case, the first imaging device 31 is attached to the end effector 22 to be rotatable around the optical axis AX1.

When the control unit 40 rotates the image sensor 32f of the second imaging device 32, the control unit 40 may rotate the entire second imaging device 32 for each the image sensor 32f, or may rotate only the image sensor 32f in the second imaging device 32. When the control unit 40 rotates the image sensor 32f of the second imaging device 32, the control unit 40 rotates the image sensor 32f around the optical axis AX2. In this case, the second imaging device 32 is attached to the end effector 22 to be rotatable around the optical axis AX2.

Further, in the present embodiment, the end effector 22 may include the first holding portion that holds the first imaging device 31 not to be movable. In this case, the end effector 22 may include a guide rail portion 22e as a second holding portion that movably holds the second imaging device 32. Further, the end effector 22 may include the second holding portion that holds the second imaging device 32 not to be movable. In this case, the end effector 22 may include a guide rail portion 22e as a first holding portion that movably holds the first imaging device 31.

Further, in the present embodiment, at least the first imaging device 31 may move to a predetermined end position before the robot system 10 is powered off. In this case, for example, after the control unit 40 receives a command to stop the robot system 10, the control unit 40 causes the first imaging device 31 and the second imaging device 32 to come into contact with each other in the circumferential direction to move both the first imaging device 31 and the second imaging device 32 to the predetermined end position. The predetermined end position may be the same as the predetermined initial position, or may be different from the predetermined initial position.

For example, when the predetermined end position is the same as the predetermined initial position, the first imaging device 31 and the second imaging device 32 are located at the predetermined initial position at a point in time when the robot system 10 is powered on again. Therefore, it is not necessary to provide a process of moving the first imaging device 31 and the second imaging device 32 to the predetermined initial positions after the robot system 10 is powered on. This makes it possible to preferably acquire the position of each imaging device 30 using the position acquisition unit 34 even when the first imaging device 31 and the second imaging device 32 are moved immediately after the robot system 10 is powered on.

The movement of the first imaging device 31 to the predetermined end position is performed, for example, in a state in which the member to which the first imaging device 31 is attached is stationary. Therefore, the first imaging device 31 can be easily moved to the end position. Further, since it is possible to suppress the movement of the first imaging device 31 while the end effector 22 is moving, it is possible to further suppress complication of the calculation of the movement of the end effector 22 and the calculation of the movement of the robot arm 21.

The movement of the second imaging device 32 to the predetermined end position is performed, for example, in a state in which the member to which the second imaging device 32 is attached is stationary. Therefore, the second imaging device 32 can be easily moved to the end position. Further, since it is possible to suppress the movement of the second imaging device 32 while the end effector 22 is moving, it is possible to further suppress complication of the calculation of the movement of the end effector 22 and the calculation of the movement of the robot arm 21.

Further, for the overlapping portion (a portion commonly appearing in the two images) between the image captured by the first imaging device 31 and the image captured by the second imaging device 32, it is possible to measure a distance to a feature portion such as the target object W appearing in the overlapping portion over the entire overlapping portion. Therefore, the control unit 40 may measure the distance over the entire overlapping portion between the image captured by the first imaging device 31 and the image captured by the second imaging device 32, and create a depth map of the overlapping portion. The depth map is, for example, an image showing distance information with different colors, shades of colors, and the like.

Further, the control unit 40 may measure the distance to the target object W using the images captured by the first imaging device 31 and the second imaging device 32 and the image captured by the camera unit 60. For example, when the distance to the target object W measured from the images captured by the first imaging device 31 and the second imaging device 32 becomes equal to or smaller than a predetermined distance, the control unit 40 may power on the camera unit 60 and measure the distance to the target object W using each of the images captured by the first imaging device 31 and the second imaging device 32 and the image captured by the camera unit 60.

Further, the control unit 40 may switch between a first imaging mode in which the distance to the target object W is measured using images captured by the first imaging device 31 and the second imaging device 32, and a second imaging mode in which the distance to the target object W is measured using the image captured by the camera unit 60 depending on the distance to the target object W. In this case, for example, the control unit 40 may measure the distance to the target object W in the first imaging mode described above when the distance to the target object W is larger than the predetermined distance, and measure the distance to the target object W in the second imaging mode described above when the distance to the target object W is equal to or smaller than the predetermined distance.

### <Second embodiment>

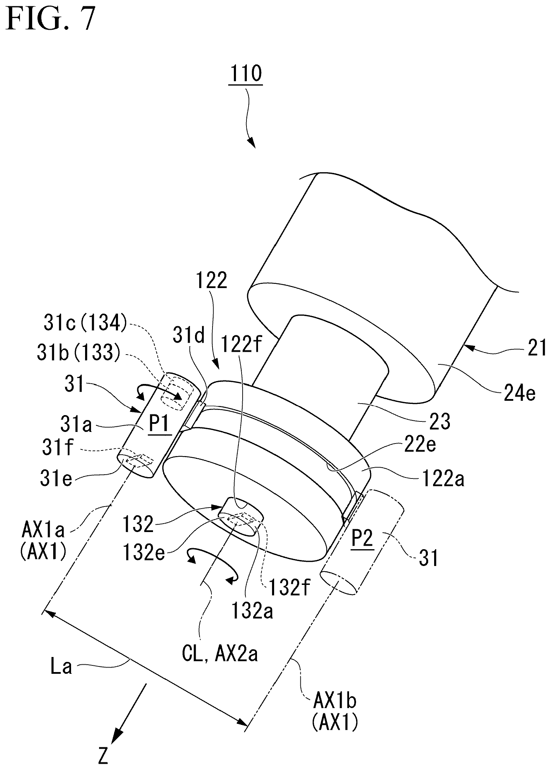

FIG. 7 is a perspective view illustrating a portion of a robot system 110 of the present embodiment. In FIG. 7, illustration of a finger portion 22b of an end effector 122 and a camera unit 60 is omitted. The same configurations as those in the above-described embodiment are appropriately denoted by the reference signs, for example, and description thereof will be omitted.

As illustrated in FIG. 7, in the robot system 110 of the present embodiment, the second imaging device 132 is fixed with respect to the end effector 122. That is, the second imaging device 132 does not move relative to the end effector 122 in the present embodiment. Therefore, in the present embodiment, only the first imaging device 31 is movable in the predetermined circumferential direction around the end effector 122. Thus, in the present embodiment, one of the first imaging device 31 and the second imaging device 132 is movable in the predetermined circumferential direction around the end effector 122, and the other is fixed to a predetermined portion of the end effector 122.

The second imaging device 132 is fixed to a base portion 122a, for example. The base portion 122a includes a hole portion 122f recessed toward the proximal end side (-Z side) from a distal end side (+Z side) surface of the base portion 122a. The hole portion 122f is, for example, a circular hole centered on the central axis CL.

A portion on the proximal end side (-Z side) of the second imaging device 132 is fitted and held in the hole portion 122f. In the present embodiment, the hole portion 122f corresponds to the second holding portion that holds the second imaging device 132. That is, in the present embodiment, the end effector 122 has the hole portion 122f as the second holding portion. In the present embodiment, the second imaging device 132 is held not to be movable by the hole portion 122f serving as the second holding portion. A portion on the distal end side (+Z side) of the second imaging device 132 protrudes to the distal end side from a center of a surface on the distal end side in the base portion 122a. The base portion 122a has the same configuration as the base portion 22a of the first embodiment described above except that the hole portion 122f is provided.

An optical axis AX2a of the second imaging device 132, for example, is parallel to the optical axis AX1 of the first imaging device 31 and matches the central axis CL. The second imaging device 132 includes a cylindrical housing 132a, a lens 132e fitted in an opening on a distal end side (+Z side) of the housing 132a, and an image sensor 132f disposed inside the housing 132a. Each unit of the second imaging device 132 can be the same as each unit of the second imaging device 32 of the first embodiment described above. The second imaging device 132 does not includes the second drive unit 32b and the second position acquisition unit 32c, unlike the second imaging device 32 of the first embodiment.

In the present embodiment, the baseline length L between the first imaging device 31 and the second imaging device 132 is fixed. In the present embodiment, the distance information acquisition unit 44 acquires the information on the distance to the target object W on the basis of the baseline length L and the two images acquired from the first imaging device 31 and the second imaging device 132, similarly to the first embodiment described above.

Further, in the present embodiment, the distance information acquisition unit 44 can acquire the information on the distance to the target object W on the basis of two images captured by the first imaging device 31. Specifically, for example, when the first imaging device 31 is located at a first position P1 indicated by a solid line in FIG. 7, a first image is acquired by the first imaging device 31, and when the first imaging device 31 is located at a second position P2 indicated by a two-dot chain line in FIG. 7, a second image is acquired by the first imaging device 31. In the present embodiment, the distance information acquisition unit 44 can also acquire the information on the distance to the target object W on the basis of the first image and the second image that have been obtained in this way. More specifically, the distance information acquisition unit 44 can acquires the information on the distance to the target object W on the basis of the first image and the second image acquired by the first imaging device 31, and a baseline length La, which is a distance between the first imaging device 31 at the first position P1 and the first imaging device 31 at the second position P2.

The baseline length La is a distance between the optical axis AX1a of the first imaging device 31 at the first position P1 and the optical axis AX1b of the first imaging device 31 at the second position P2. The baseline length La is determined by the first position P1 and the second position P2. In the present embodiment, the control unit 40 can change the baseline length La by changing the first position P1 and the second position P2 at which the first imaging device 31 acquires an image. The control unit 40 changes the baseline length La, for example, depending on work content of the robot system 110.

In the present embodiment, the position acquisition unit 134 acquires position information on the first position P1 and the second position P2. The position information on the first position P1 and the second position P2 includes, for example, information on the first position P1, information on the second position P2, and information indicating a relative positional relationship between the first position P1 and the second position P2. In the present embodiment, the position acquisition unit 134 is configured of only the first position acquisition unit 31c of the first imaging device 31. The position acquisition unit 134 acquires the position information of the first position P1 and the second position P2 on the basis of the rotational position of the drive unit 133, for example. In the present embodiment, the drive unit 133 is configured of only the first drive unit 31b of the first imaging device 31. The distance information acquisition unit 44 acquires the baseline length La on the basis of the position information on the first position P1 and the second position P2 acquired by the position acquisition unit 134.

The distance information acquisition unit 44, for example, can selectively acquire the information on the distance to the target object W using images acquired by the first imaging device 31 and the second imaging device 132 or acquire the information on the distance to the target object W using two images acquired at the first position P1 and the second position P2 different from each other by the first imaging device 31, depending on the work content of the robot system 110.

When the information on the distance to the target object W is acquired using the images acquired by the first imaging device 31 and the second imaging device 132, the distance information acquisition unit 44 rotates the at least one of the image acquired by the first imaging device 31 and the image acquired by the second imaging device 132 to adjust the direction of the acquired image as in the first embodiment.

On the other hand, when the information on the distance to the target object W is acquired by using the two images acquired at the first position P1 and the second position P2 different from each other by the first imaging device 31, the distance information acquisition unit 44 rotates the at least one of the first image acquired at the first position P1 by the first imaging device 31 and the second image acquired at the second position P2 by the first imaging device 31 to adjust the direction of the acquired image. The distance information acquisition unit 44 may rotate only the first image acquired at the first position P1 to align the direction of the first image with the direction of the second image, may rotate only the second image acquired at the second position P2 to align the direction of the second image with the direction of the second image, or may rotate both the first image acquired at the first position P1 and the second image acquired at the second position P2 to adjust the direction of the first image and the direction of the second image. Other configurations of the robot system 110 of the present embodiment can be the same as those of the robot systems of the above-described embodiments.

According to the present embodiment, the first imaging device 31 is movable in the predetermined circumferential direction around the end effector 122, and the second imaging device 132 is fixed to a predetermined portion of the end effector 122. Therefore, it is easy to simplify a structure of the robot system 110 as compared with a case in which both the first imaging device 31 and the second imaging device 132 are provided to be movable together.

Further, according to the present embodiment, the first imaging device 31 captures the first image of the target object W at the first position P1 and the second image of the target object W at the second position P2 different from the first position P1. The distance information acquisition unit 44 acquires the information on the distance to the target object W on the basis of the first image and the second image. Therefore, the information on the distance to the target object W can be acquired using only the image acquired by one first imaging device 31. Accordingly, even when the second imaging device 132 is not provided, the information on the distance to the target object W can be acquired only by the one first imaging device 31. Further, it is possible to change the baseline length La by changing the relative position between the first position P1 and the second position P2.

Further, according to the present embodiment, the distance information acquisition unit 44 rotates the at least one of the first image acquired at the first position P1 by the first imaging device 31 and the second image acquired at the second position P2 by the first imaging device 31 to adjust the direction of the acquired image. Therefore, even when the image sensor 31f of the first imaging device 31 at the first position P1 and the image sensor 132f of the second imaging device 132 at the second position P2 are disposed in different postures, it is possible to align the direction of the first image acquired at the first position P1 with the direction of the second image acquired at the second position P2. This makes it possible to preferably acquire the information on the distance to the target object W on the basis of the image acquired by the first imaging device 31 using the distance information acquisition unit 44 regardless of the first position P1 and the second position P2.

Further, according to the present embodiment, the control unit 40 can change the baseline length La, which is the distance between the first imaging device 31 at the first position P1 and the first imaging device 31 at the second position P2, and the distance information acquisition unit 44 acquires the information on the distance to the target object W on the basis of the baseline length La. Therefore, using only the first imaging device 31, it is possible to acquire the information on the distance to the target object W at different baseline lengths La.

Further, according to the present embodiment, the position acquisition unit 134 acquires the position information on the first position P1 and the second position P2, and the distance information acquisition unit 44 acquires the baseline length La on the basis of the position information on the first position P1 and the second position P2 acquired by the position acquisition unit 134. Therefore, the distance information acquisition unit 44 can preferably acquire the information on the distance to the target object W on the basis of the acquired baseline length La while preferably acquiring the baseline length La.

Further, according to the present embodiment, the control unit 40 changes the baseline length La depending on work content of the robot system 110. Therefore, it is possible to preferably change the baseline length La, which is the distance between the first imaging device 31 at the first position P1 and the first imaging device 31 at the second position P2, depending on work content of the robot system 110. This makes it possible to preferably perform each work with the robot system 110.

Further, according to the present embodiment, the distance information acquisition unit 44 rotates the at least one of the first image acquired by the first imaging device 31 and the second image acquired by the second imaging device 32 to adjust the direction of the acquired image. Therefore, even when the image sensor 31f of the first imaging device 31 and the image sensor 32f of the second imaging device 32 are disposed in different postures, it is possible to align the direction of the first image acquired by the first imaging device 31 with the direction of the second image acquired by the second imaging device 32. This makes it possible to preferably acquire the information on the distance to the target object W using the distance information acquisition unit 44 on the basis of the images acquired by each imaging device 30 regardless of a relative position and relative posture of the first imaging device 31 and the second imaging device 32. Therefore, even when the at least one of the first imaging device 31 and the second imaging device 32 is moved so that the first imaging device 31 and the second imaging device 32 are at arbitrary positions and postures, it is possible to preferably acquire the information on the distance to the target object W.

In the present embodiment, the first imaging device 31 may be movable in the radial direction. In this case, a position in the radial direction of the first imaging device 31 is changed, making it possible to change the baseline length, which is the distance between the first imaging device 31 and the second imaging device 132. Further, in the present embodiment, the second imaging device 132 may not be provided. In this case, the information on the distance to the target object W can be acquired by using only the first imaging device 31, as described above.

Further, in the present embodiment, the first imaging device 31 may operate so that the long sides of the image sensor 31f of the first imaging device 31 at the first position P1 and the image sensor 31f of the first imaging device 31 at the second position P2 are parallel to each other. This makes it possible to align the directions of the images captured at the first position P1 and the second position P2 by the first imaging device 31 without performing processing such as rotation on the captured images. Therefore, the load of image processing in the control unit 40 can be reduced as compared with a case in which the processing such as rotation is performed on the acquired image. In this case, the first imaging device 31 is attached to be rotatable around the optical axis AX1, for example. For example, the control unit 40 rotates the first imaging device 31 around the optical axis AX1 depending on the position in the circumferential direction of the first imaging device 31, to perform adjustment so that the long sides of the image sensor 31f are always in the same direction. Thus, in the present embodiment, the control unit 40 may rotate the image sensor 31f of the first imaging device 31 to adjust a direction of the image acquired by the first imaging device 31.

Further, when only one first imaging device 31 is movable relative to the member to which the first imaging device 31 is attached as in the present embodiment, the first imaging device 31 can be moved relative to the robot arm 21 or may be movable with respect to the adapter 23. When the first imaging device 31 is movable with respect to the robot arm 21, the first imaging device 31 may be movable in a predetermined circumferential direction around the robot arm 21. When the first imaging device 31 is movable with respect to the adapter 23, the first imaging device 31 may be movable in a predetermined circumferential direction around the adapter 23. In these cases, the distance information acquisition unit 44 can acquire the information on the distance to the target object W on the basis of the first image and the second image captured at the first and second different positions P1 and P2 by the first imaging device 31.

### <Third embodiment>

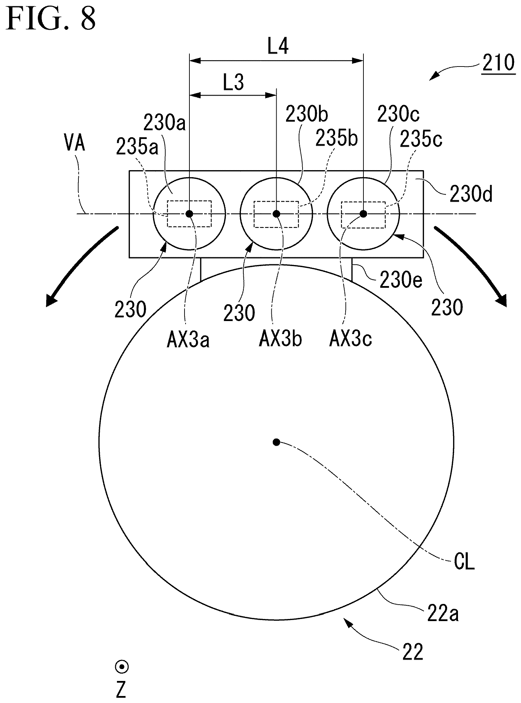

FIG. 8 is a view of a portion of the robot system 210 of the present embodiment viewed from the distal end side (+Z side) in the central axis direction. In FIG. 8, illustration of the finger portion 22b of the end effector 22 and the camera unit 60 is omitted. The same configurations as those in the above-described embodiment are appropriately denoted by the reference signs, for example, and description thereof will be omitted.

As illustrated in FIG. 8, the robot system 210 of the present embodiment includes three or more imaging devices 230 that images a target object W. For the imaging devices 230, for example, three imaging devices including an imaging device 230a, an imaging device 230b, and an imaging device 230c are provided. In the present embodiment, the three imaging devices 230a, 230b, and 230c are disposed side by side on a predetermined axis VA. The axis VA is, for example, an imaginary axis extending in a direction (a horizontal direction in FIG. 8) perpendicular to both a central axis direction and a radial direction. The imaging device 230a, the imaging device 230b, and the imaging device 230c are disposed at equal intervals in an axial direction of the axis VA, for example. In the axial direction of axis VA, the imaging device 230b is located between the imaging device 230a and the imaging device 230c. An optical axis AX3a of the imaging device 230a, an optical axis AX3b of the imaging device 230b, and an optical axis AX3c of the imaging device 230c, for example, extend in the central axis direction and are parallel to each other.

An image sensor 235a of the imaging device 230a, an image sensor 235b of the imaging device 230b, and an image sensor 235c of the imaging device 230c have a rectangular shape when viewed in the central axis direction. In the present embodiment, the image sensor 235a, the image sensor 235b, and the image sensor 235c are disposed in the same posture. In the present embodiment, the three imaging devices 230a, 230b, and 230c are disposed such that long sides of the image sensors 235a, 235b, and 235c in the three imaging devices 230a, 230b, and 230c are parallel to each other.

The robot system 210 includes a holding member 230d that holds the three imaging devices 230a, 230b, and 230c, and a slider 230e that connects the holding member 230d to a base portion 22a of the end effector 22. The three imaging devices 230a, 230b, and 230c are fixed to the holding member 230d not to move relative to each other. The slider 230e is connected to the guide rail portion 22e provided on the base portion 22a of the end effector 22, like the sliders 31d and 32d of the first embodiment. The slider 230e is movable in the circumferential direction around the base portion 22a along the guide rail portion 22e.

Although not illustrated, the robot system 210 includes a driving unit that moves the slider 230e in the circumferential direction. The slider 230e is moved in the circumferential direction along the guide rail portion 22e by the drive unit, such that the holding member 230d and the three imaging devices 230a, 230b, and 230c held by the holding member 230d move in the circumferential direction. In the present embodiment, the three imaging devices 230a, 230b, and 230c move in the circumferential direction while the long sides of the image sensors 235a, 235b, and 235c remain parallel to each other.

In the present embodiment, the control unit 40 acquires information on a distance to the target object W on the basis of information of images of the target object W acquired by the two imaging devices 230 among the three imaging devices 230a, 230b, and 230c. The control unit 40 selects, for example, the two imaging devices 230 from among the three imaging devices 230a, 230b, and 230c, and acquires the information on the distance to the target object W on the basis of the information on the images acquired by the two selected imaging devices 230. As the two imaging devices 230 to be selected, there are three patterns of the imaging device 230a and the imaging device 230b, the imaging device 230b and the imaging device 230c, and the imaging device 230a and the imaging device 230c.

A baseline length L3 that is a distance between the imaging device 230a and the imaging device 230b, and a baseline length L4 that is a distance between the imaging device 230a and the imaging device 230c are different from each other. That is, the baseline lengths differ between a case in which the imaging device 230a and the imaging device 230b are selected as the two imaging devices 230 and a case in which the imaging device 230a and the imaging device 230c are selected. Accordingly, in the present embodiment, the control unit 40 can change the two imaging devices 230 to be selected, to change the baseline length when acquiring the information on the distance to the target object W. The baseline length L3 is, for example, smaller than the baseline length L4. The baseline length L3 is a distance between the optical axis AX3a of the imaging device 230a and the optical axis AX3b of the imaging device 230b. The baseline length L4 is a distance between the optical axis AX3a of the imaging device 230a and the optical axis AX3c of the imaging device 230c.

The baseline length that is a distance between the imaging device 230b and the imaging device 230c is, for example, the same as the baseline length L3 that is the distance between the imaging device 230a and the imaging device 230b. The baseline length that is the distance between the imaging device 230b and the imaging device 230c is a distance between the optical axis AX3b of the imaging device 230b and the optical axis AX3c of the imaging device 230c.

The control unit 40, for example, changes the two imaging devices 230 to be selected, according to work content of the robot system 210 or the like to change the baseline length. The control unit 40 acquires the information on the distance to the target object W on the basis of the images acquired by the two selected imaging devices 230 and the baseline length between the two imaging devices 230 using the distance information acquisition unit 44. The control unit 40 controls at least one of the robot arm 21 and the end effector 22 on the basis of the information on the distance to the target object W that has been acquired in this way.

In the present embodiment, the control unit 40 controls at least one of the robot arm 21 and the end effector 22 connected to the robot arm 21 on the basis of the information on the images acquired by the two imaging devices 230 among the three imaging devices 230a, 230b, and 230c. In the present embodiment, the control unit 40 selects two imaging devices 230 from among the three imaging devices 230a, 230b, and 230c, and controls at least one of the robot arm 21 and the end effector 22 on the basis of the information on the images acquired by the two selected imaging devices 230.

Specifically, for example, when the target object W does not appear in at least one of the images captured by the two selected imaging devices 230, the control unit 40 moves at least one of the robot arm 21 and the end effector 22 so that the target object W can be imaged by the two selected imaging devices 230.

For example, when the target object W does not appear in at least one of the images captured by the two selected imaging devices 230, the control unit 40 may move the three imaging devices 230 in the circumferential direction so that the target object W can be imaged by the two selected imaging devices 230.

In the present embodiment, the control unit 40 performs control so that imaging of at least two imaging devices 230 among the three imaging devices 230a, 230b, and 230c is synchronized. The control unit 40 performs control, for example, so that imaging of the at least two selected imaging devices 230 described above is synchronized.

According to the present embodiment, the control unit 40 acquires the information on the distance to the target object W on the basis of the information on the images of the target object W acquired by the two imaging devices 230 among the three imaging devices 230a, 230b, and 230c. Therefore, images acquired by the two imaging devices 230 to be used is changed depending on the work content of the robot system 210, the target object W, or the like, so that the information on the distance to the target object W can be preferably acquired. In the present embodiment, for example, the baseline length can be changed depending on whether images acquired by the two imaging devices 230a and 230b are used or whether images acquired by the two imaging devices 230a and 230c are used. Therefore, the two imaging devices 230 to be appropriately selected are changed depending on the distance to the target object W or the like, so that the information on the distance to the target object W can be preferably acquired.

Further, according to the present embodiment, the control unit 40 selects two imaging devices 230 from the three imaging devices 230a, 230b, and 230c, and acquires the information on the distance to the target object W on the basis of the information on the images acquired by the two selected imaging devices 230. Therefore, when the information on the distance to the target object W is acquired, imaging may be performed by the two imaging devices 230 among the three imaging devices 230a, 230b, and 230c, and imaging may not be performed by one remaining imaging device 230. Therefore, a load on the control unit 40 at the time of acquisition of the information on the distance to the target object W can be reduced.

Further, according to the present embodiment, the control unit 40 controls at least one of the robot arm 21 and the end effector 22 connected to the robot arm 21 on the basis of the information on the images acquired by the two imaging devices 230 among the three imaging devices 230a, 230b, and 230c. Therefore, it is possible to acquire information such as the position of the target object W and an environment in which the robot system 210 is disposed, from the images acquired by the two imaging devices 230, and to preferably move the robot arm 21 and the end effector 22 depending on, for example, the work content of the robot system 210.

Further, according to the present embodiment, the control unit 40 selects two imaging devices 230 from among the three imaging devices 230a, 230b, and 230c, and controls at least one of the robot arm 21 and the end effector 22 connected to the robot arm 21 on the basis of the information on the images acquired by the two selected imaging devices 230. Therefore, when at least one of the robot arm 21 and the end effector 22 is controlled on the basis of the information on the images acquired by the two imaging devices 230, imaging may not be performed by the other imaging device 230. This makes it possible to reduce a load on the control unit 40 when controlling the robot arm 21 and the end effector 22.

Further, according to the present embodiment, the control unit 40 performs control to synchronize imaging in at least two imaging devices 230 among the three imaging devices 230a, 230b, and 230c. Therefore, it is possible to preferably image the target object W at the same timing with the at least two imaging devices 230. This makes it possible to preferably acquire the information on the distance to the target object W on the basis of the images obtained by the at least two imaging devices 230.

Further, according to the present embodiment, the three imaging devices 230a, 230b, and 230c are disposed side by side on the predetermined axis VA. Therefore, as in the present embodiment, the imaging devices 230a, 230b, and 230c can be disposed side by side in a state in which postures of the image sensors 235a, 235b, and 235c are aligned. This makes it easy to acquire the information on the distance to the target object W, for example, without rotating the image acquired by the imaging device 230 even when the information on the distance to the target object W is acquired using the images acquired by any two imaging devices 230 among the three imaging devices 230a, 230b, and 230c. Therefore, a load on the control unit 40 at the time of acquisition of the information on the distance to the target object W can be reduced.

Further, according to the present embodiment, the optical axes AX3a, AX3b, and AX3c of the three imaging devices 230a, 230b, and 230c are parallel to one another. Therefore, even when images acquired by any two imaging devices 230 among the three imaging devices 230a, 230b, and 230c are used, the information on the distance to the target object W can be preferably acquired from the two images.

Further, according to the present embodiment, the three imaging devices 230a, 230b, and 230c are disposed so that the long sides of the image sensors 235a, 235b, and 235c of the three imaging devices 230a, 230b, and 230c are parallel to one another. Therefore, it is easy to acquire the information on the distance to the target object W from the image acquired by the imaging device 230, for example, without rotating the acquired image. Therefore, a load on the control unit 40 at the time of acquisition of the information on the distance to the target object W can be reduced.

In the present embodiment, four or more imaging devices 230 may be disposed side by side on the predetermined axis VA. In three or more imaging devices 230 disposed side by side on the axis VA, a distance between two adjacent imaging devices 230 may be different.

### <Fourth embodiment>

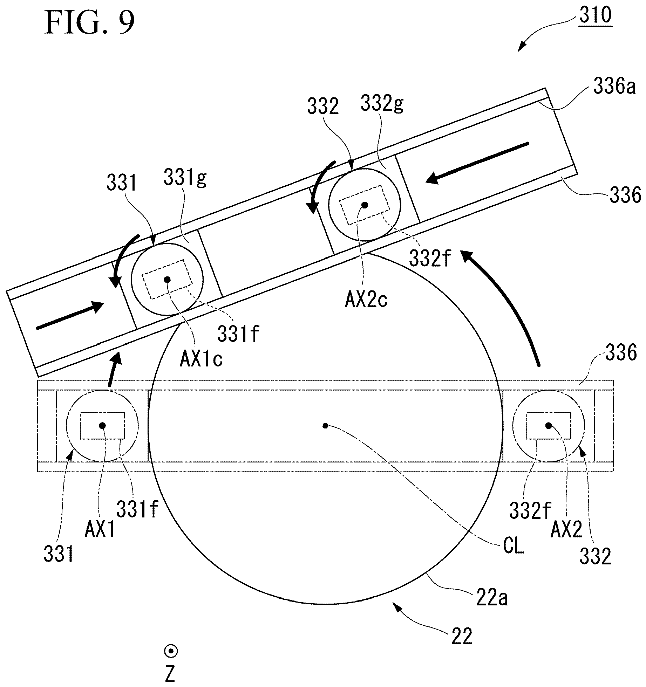

FIG. 9 is a view of a portion of a robot system 310 of the present embodiment viewed from the distal end side (+Z side) in the central axis direction. In FIG. 9, illustration of the finger portion 22b of the end effector 22 and the camera unit 60 is omitted. The same configurations as those in the above-described embodiment are appropriately denoted by the reference signs, for example, and description thereof will be omitted.

As illustrated in FIG. 9, the robot system 310 of the present embodiment includes a connection member 336 that connects the first imaging device 331 to the second imaging device 332. The connection member 336 is, for example, a guide rail. The connection member 336 has a linearly extending groove 336a. The groove 336a is, for example, a groove recessed from a distal end side (+Z side) to a proximal end side (-Z side). The groove 336a is open at both end portions in the direction in which the groove 336a extends, for example.

The robot system 310 includes a first slider 331g that attaches the first imaging device 331 to the connection member 336, and a second slider 332g that attaches the second imaging device 332 to the connection member 336.
The first slider 331g is fixed to the first imaging device 331. The second slider 332g is fixed to the second imaging device 332. The first slider 331g and the second slider 332g are fitted in the groove 336a to be movable in the direction in which the groove 336a extends, for example. Thus, in the present embodiment, the first imaging device 331 and the second imaging device 332 are connected by the connection member 336 via the first slider 331g and the second slider 332g.

The first slider 331g and the second slider 332g are restricted from moving and rotating relative to the connection member 336 in directions other than a direction in which the groove 336a extends. The first slider 331g is attached to be movable in the circumferential direction and rotatable around the optical axis AX1c of the first imaging device 331. The second slider 332g is attached to be movable in the circumferential direction and rotatable around the optical axis AX2c of the second imaging device 332.

The first imaging device 331 and the second imaging device 332 are movable in the circumferential direction around the base portion 22a of the end effector 22. In the present embodiment, the first imaging device 331 is rotatable around the optical axis AX1c of the first imaging device 331 together with the first slider 331g. In the present embodiment, the second imaging device 332 is rotatable around the optical axis AX2c of the second imaging device 332 together with the second slider 332g. A long side of the image sensor 331f of the first imaging device 331 and a long side of the image sensor 332f of the second imaging device 332 are, for example, disposed parallel to each other, and parallel to the direction in which the groove 336a extends.

For example, when the first imaging device 331 and the second imaging device 332 move in the circumferential direction from a position indicated by a two-dot chain line to a position indicated by a solid line in FIG. 9. The connection member 336 connecting the first imaging device 331 to the second imaging device 332 also moves depending on a position of the first imaging device 331 and a position of the second imaging device 332. In FIG. 9, for example, the connection member 336 is moving upward while rotating about an axis in the central axis direction.

The first imaging device 331 and the second imaging device 332 move relative to the connection member 336 in the direction in which the groove 336a extends according to the position in the circumferential direction. A relative change in the position of the first imaging device 331 and the position of the second imaging device 332 in the direction in which the groove 336a extends causes a change in a baseline length that is a distance between the first imaging device 331 and the second imaging device 332. The baseline length between the first imaging device 331 and the second imaging device 332 is a distance between the optical axis AX1c of the first imaging device 331 and the optical axis AX2c of the second imaging device 332. For example, when the first imaging device 331 and the second imaging device 332 move in the circumferential direction from the position indicated by a two-dot chain line to the position indicated by a solid line in FIG. 9, the first imaging device 331 and the second imaging device 332 move in a direction in which the first imaging device 331 and the second imaging device 332 approach each other, and the baseline length becomes smaller.

Here, the first slider 331g and the second slider 332g are restricted from moving and rotating relative to the connection member 336 in directions other than the direction in which the groove 336a extends. Therefore, the first slider 331g and the second slider 332g rotate around the optical axes AX1c and AX2c of the respective imaging devices so that relative postures with respect to the connection member 336 is maintained, depending on the change in at least one of a position and a posture of the connection member 336 according to movement of the first imaging device 331 and the second imaging device 332. Accordingly, the first imaging device 331 to which the first slider 331g is fixed and the second imaging device 332 to which the second slider 332g is fixed also rotate around the respective optical axes AX1c and AX2c so that relative postures with respect to the connection member 336 are maintained. Therefore, even when the first imaging device 331 and the second imaging device 332 move in the circumferential direction, relative postures of the image sensor 331f of the first imaging device 331 and the image sensor 332f of the second imaging device 332 can be maintained. That is, the long side of the image sensor 331f of the first imaging device 331 and the long side of the image sensor 332f of the second imaging device 332 are kept parallel regardless of the position of the first imaging device 331 and the position of the second imaging device 332. Thus, in the present embodiment, the connection member 336 can hold the first imaging device 331 and the second imaging device 332 in a state in which the relative postures of the first imaging device 331 and the second imaging device 332 are maintained in predetermined postures. Other configurations of the robot system 310 can be the same as those of the robot system of each embodiment described above.

According to the present embodiment, as described above, at least one of the first imaging device 331 and the second imaging device 332 moves such that the long sides of the image sensor 331f of the first imaging device 331 and the image sensor 332f of the second imaging device 332 are parallel to each other. Therefore, it is possible to preferably acquire the information on the distance to the target object W on the basis of the image acquired by the first imaging device 331 and the image acquired by the second imaging device 332 without, for example, rotating the images acquired by the respective imaging devices.

Further, according to the present embodiment, the connection member 336 connecting the first imaging device 331 to the second imaging device 332 is provided, and the connection member 336 can hold the first imaging device 331 and the second imaging device 332 in a state in which the relative postures of the first imaging device 331 and the second imaging device 332 are maintained in the predetermined postures. Therefore, for example, even when a drive unit that rotates the first imaging device 331 and the second imaging device 332 around the respective optical axes AX1c and AX2c is not provided, the relative postures of the image sensor 331f of the first imaging device 331 and the image sensor 332f of the second imaging device 332 can be easily maintained in postures in which the long sides are parallel to each other by the connection member 336. Accordingly, even when at least one of the first imaging device 331 and the second imaging device 332 is moved to change the baseline length, the information on the distance to the target object W can be acquired easily preferably on the basis of the images acquired by the first imaging device 331 and the second imaging device 332.

In the present embodiment, for example, only the image sensor 331f of the first imaging device 331 may be rotatable around the optical axis AX1c, or only the image sensor 332f of the second imaging device 332 may be rotatable around the optical axis AX2c. In this case, at least one of the image sensor 331f of the first imaging device 331 and the image sensor 332f of the second imaging device 332 may be movable so that the long sides of the image sensor 331f of the first imaging device 331 and the image sensor 332f of the second imaging device 332 are parallel to each other.

### <Fifth embodiment>

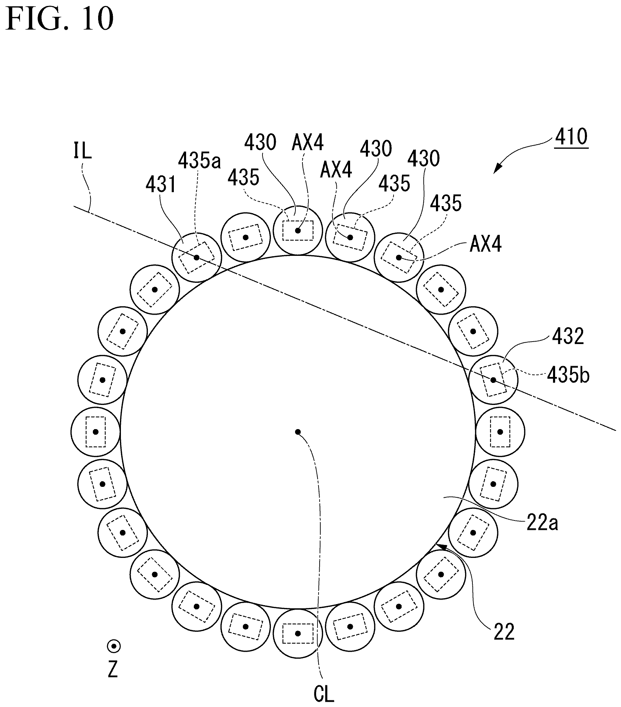

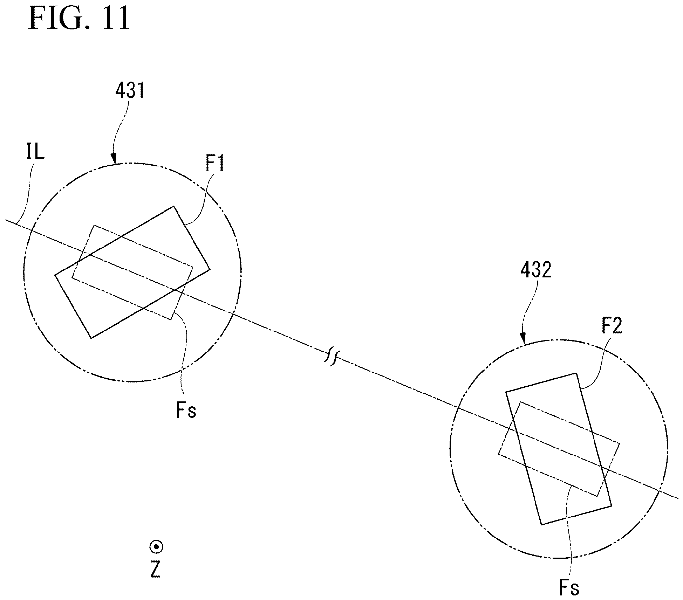

FIG. 10 is a view of a portion of the robot system 410 of the present embodiment viewed from the distal end side (+Z side) in the central axis direction. In FIG. 10, illustration of the finger portion 22b of the end effector 22 and the camera unit 60 is omitted. FIG. 11 is a diagram illustrating a portion of a procedure when the robot system 410 of the present embodiment acquires the information on the distance to the target object W. The same configurations as those in the above-described embodiment are appropriately denoted by the reference signs, for example, and description thereof will be omitted.

In the present embodiment, the three or more imaging devices 430 are provided. For example, 24 imaging devices 430 are provided. A plurality of imaging devices 430 are disposed side by side in the circumferential direction around the end effector 22. That is, in the present embodiment, three or more imaging devices 430 are disposed side by side on a predetermined circumference. In the present embodiment, the predetermined circumference is a circumference around the central axis CL. The plurality of imaging devices 430, for example, are disposed at regular intervals over a circumference in the circumferential direction. That is, in the present embodiment, the three or more imaging devices 430 are disposed at equal intervals on a predetermined circumference. The optical axes AX4 of the three or more imaging devices 430 are parallel to each other.

Along side of the image sensor 435 of each imaging device 430 is perpendicular to the radial direction passing through the optical axis AX4 of each imaging device 430 when viewed in the central axis direction. When the number of imaging devices 430 is N, the N imaging devices 430 are disposed in N-fold symmetry around the central axis CL. That is, in the present embodiment, the 24 imaging devices 430 are disposed in 24-fold symmetry around the central axis CL. The imaging device 430 is fixed to the end effector 22, for example. More specifically, the imaging device 430 is fixed to, for example, the outer peripheral surface of the base portion 22a. That is, the end effector 22 includes, for example, a holding portion that holds the three or more imaging devices 430 on the outer peripheral surface of the base portion 22a.

In the present embodiment, the control unit 40 selects two images from three or more images acquired by the three or more imaging devices 430, and acquire the information on the distance to the target object W on the basis of information on the two selected images. The control unit 40, for example, selects two images from among 24 images acquired by the 24 imaging devices 430 on the basis of information on occlusion of the target object W. The information on occlusion of the target object W includes, for example, information on whether or not the target object W appears in the image, information on a shielding state of the target object W, and information on a proportion of a portion of the target object W appearing in the image. The control unit 40, for example, selects two images in which the target object W most preferably appears from among the 24 acquired images. The control unit 40 acquires the information on the distance to the target object W on the basis of the two selected images.

Here, a case in which the control unit 40 selects an image F1 acquired by the imaging device 431 and an image F2 acquired by the imaging device 432 among the plurality of imaging devices 430 will be described as an example. The image sensor 435a of the imaging device 431 and the image sensor 435b of the imaging device 432 are disposed in different postures. In this case, the control unit 40 cuts out a portion of the two acquired images F1 and F2 along a rectangular frame Fs, as illustrated in FIG. 11. Long sides of the rectangular frame Fs are parallel to a virtual line IL connecting the optical axis of the imaging device 431 to the optical axis of the imaging device 432. The control unit 40 acquires the information on the distance to the target object W on the basis of a cut-out portion of the two images F1 and F2.

In the present embodiment, the control unit 40 selects the two images from the three or more images acquired by the three or more imaging devices 430, and controls at least one of the robot arm 21 and the end effector 22 connected to the robot arm 21 on the basis of the information on the two selected images. In the present embodiment, the control unit 40 performs control to synchronize imaging in the three or more imaging devices 430. Other configurations of the robot system 410 can be the same as those of the robot system of each embodiment described above.

According to the present embodiment, the control unit 40 selects the two images from among the three or more images acquired by the three or more imaging devices 430, and acquire the information on the distance to the target object W on the basis of the information on the two selected images. Therefore, two images that are most suitable for acquisition of the information on the distance to the target object W are selected from among the three or more images acquired by the three or more imaging devices 430, and the information on the distance to the target object W can be acquired. This makes it possible to preferably acquire the information on the distance to the target object W depending on work content of the robot system 410, an environment in which the robot system 410 is disposed, a position and posture of the robot arm 21, and the like.

Further, according to the present embodiment, the control unit 40 selects two images from among three or more images acquired by the plurality of imaging devices 430 on the basis of the information on occlusion of the target object W. Therefore, even when at least a portion of the target object W cannot be imaged by some of the imaging devices 430 due to a shielding object or the like, two images in which the target object W is preferably imaged can be selected. Accordingly, even when the target object W is partially blocked by the shielding object or the like, it is easy to preferably acquire the information on the distance to the target object W.

Further, according to the present embodiment, the control unit 40 selects the two images from among the three or more images acquired by the three or more imaging devices 430, and controls at least one of the robot arm 21 and the end effector 22 connected to the robot arm 21 on the basis of the information on the two selected images. Therefore, two images including optimal information are selected from among the plurality of images acquired by the respective imaging devices 430 to move the robot arm 21 and the end effector 22, making it possible to preferably move the robot arm 21 and the end effector 22.

Further, according to the present embodiment, the three or more imaging devices 430 are disposed side by side on the predetermined circumference. Therefore, it is possible to dispose a relatively large number of imaging devices 430 side by side around the base portion 22a of the end effector 22, for example, as in the present embodiment. This makes it difficult for the imaging devices 430 to protrude from the robot 20 as compared with a case in which the same number of imaging devices 430 are disposed in a straight line form. Therefore, even when a relatively large number of imaging devices 430 are attached to the robot 20, the robot 20 can be easily moved. Further, the plurality of imaging devices 430 are disposed side by side along the circumference, making it easy to image the target object W from various angles using the plurality of imaging devices 430. Therefore, it is easy to more preferably acquire the information on the distance to the target object W using the plurality of imaging devices 430.

Further, according to the present embodiment, the three or more imaging devices 430 are disposed at regular intervals on the predetermined circumference. Therefore, it is difficult for, for example, the number of the imaging devices 430 capable of imaging the target object W to be different depending on a position and posture of the member (for example, the end effector 22) to which the imaging devices 430 are attached, as compared with a case in which the imaging devices 430 are disposed at non-equidistant intervals. This makes it easy to acquire the information on the distance to the target object W using the imaging device 430 regardless of the position and posture of the member to which the imaging device 430 is attached.

In the present embodiment, the control unit 40 may select two images from the three or more images acquired by the plurality of imaging devices 430 on the basis of at least one of distance information related to the target object W obtained in advance, the information on occlusion of the target object W, focal length information of the imaging devices 430, and information on shape change of the images obtained by the three or more imaging devices 430.

The distance information related to the target object W obtained in advance includes, for example, a distance from the robot 20 to the target object W when the robot 20 and the target object W are disposed at the initial position with the initial posture, a distance to a shielding object disposed near the target object W, and distances between a plurality of target objects W when the plurality of target objects W are disposed at the initial positions in the initial postures. The distance from the robot 20 to the target object W includes, for example, a distance from a certain portion of the robot arm 21 to the target object W, a distance from a certain portion of the end effector 22 to the target object W, and a distance from a certain portion of the adapter 23 to the target object W. The control unit 40 can select two images on the basis of the distance information related to the target object W obtained in advance, to select two images having a preferred baseline length depending on the position of the target object W and preferably acquire the information on the distance to the target object W.

The control unit 40 can select two images on the basis of the focal length information of the imaging device 430 to select two images having a preferred baseline length according to the focal length of the imaging devices 430. Here, for example, when the zoom magnification of the imaging device 430 is relatively large and two images with a relatively large baseline length are selected, an overlapping portion of the two images (a range of the image of a feature portion that overlaps and appears) becomes smaller. Therefore, for example, when the zoom magnification of the imaging device 430 is relatively large, two images with a relatively small baseline length are selected so that the overlapping portion of the two images can be increased. This makes it possible to acquire the distance to the target object W more preferably on the basis of the two images.

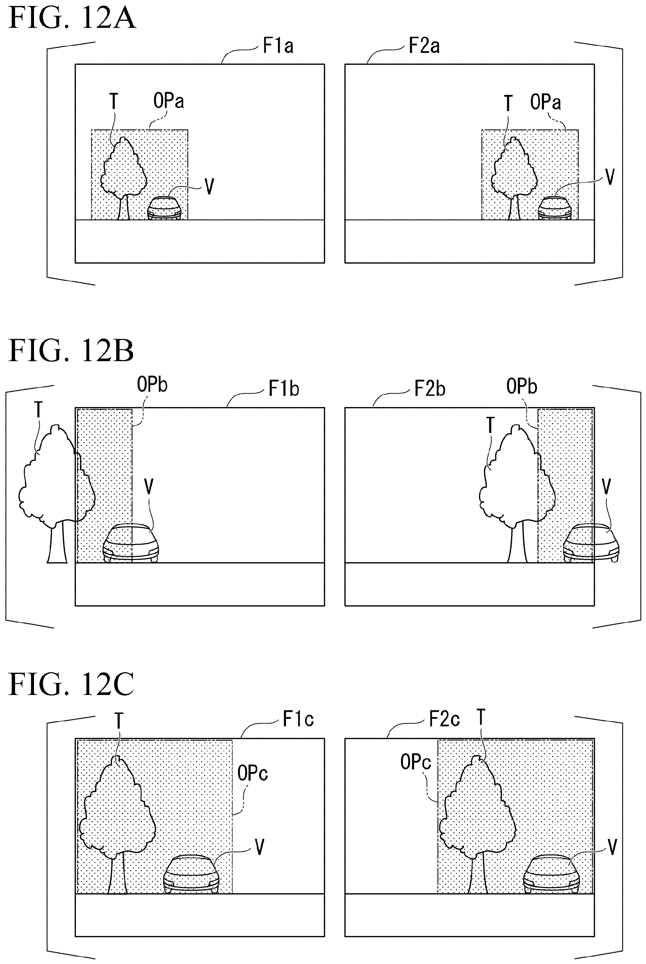

FIGS. 12A to 12C are diagrams illustrating change in the overlapping portion of two images depending on the baseline length and the zoom magnification. FIG. 12A is a diagram illustrating an example of a case in which two images F1a and F2a with a relatively large baseline length are selected when the zoom magnification of the imaging device 430 is relatively small. FIG. 12B is a diagram illustrating an example of a case in which two images F1b and F2b with a relatively large baseline length are selected when the zoom magnification of the imaging device 430 is relatively large. FIG. 12C is a diagram illustrating an example of a case in which two images F1c and F2c with a relatively small baseline length are selected when the zoom magnification of the imaging device 430 is relatively large. FIGS. 12A to 12C illustrate a case in which the target object W is a tree T and a car V.

In the case illustrated in FIG. 12A, that is, a case in which the zoom magnification of the imaging device 430 is relatively small, it is assumed that the entire tree T and the entire car V appear in the two images F1a and F2a when the two images F1a and F2a with a relatively large baseline length are selected. In this case, an overlapping portion (a range of the image of a feature portion that overlaps and appears) OPa of the two images F1a and F2a includes the entire tree T and the entire car V. Therefore, the distance to each target object W can be acquired in the entire tree T and the entire car V.

On the other hand, as illustrated in FIG. 12B, when the two images F1b and F2b are selected so that the zoom magnification is larger than that illustrated in FIG. 12A and the baseline length is the same as that illustrated in FIG. 12A, a range reflected in the images F1b and F2b becomes narrower than the range reflected in each of the images F1a and F2a in FIG. 12A, whereas since the baseline length remains relatively large, a deviation of a position at which the target object W appears in each of the images F1b and F2b remains relatively large. Therefore, in each of the images F1b and F2b, a portion of the target object W may be cut off, and an overlapping portion between the images F1b and F2b may become smaller, as illustrated in FIG. 12B.

In the example of FIG. 12B, most of the image F1b including a left portion of the tree T is cut off, and a right portion of the car V is cut off in the image F2b. In this case, an overlapping portion OPb includes only the portion of the tree T and the portion of the car V. Therefore, even when the entire tree T or the entire car V appears in one of the images, the distance to the target object W cannot be acquired for portions not included in the overlapping portion OPb.

On the other hand, even when the zoom magnification is the same as that illustrated in FIG. 12B, the two images F1c and F2c with the baseline length smaller than that shown in FIG. 12B are selected as shown in FIG. 12C, making it possible to reduce a deviation of a position at which the target object W appears in each of the images F1c and F2c. Thus, it is possible to increase a range in which the target object W appears in each of the images F1c and F2c, and to increase the overlapping portion OPc between the images F1c and F2c. In the example of FIG. 12C, the entire tree T and the entire car V appear in each of the images F1c and F2c. That is, the overlapping portion OPc includes the entire tree T and the entire car V, as in FIG. 12A. Therefore, the distance to each target object W can be acquired in the entire tree T and the entire car V.

As described above, when the zoom magnification of the imaging device 430 is relatively large as illustrated in FIGS. 12B and 12C, the two images F1c and F2c with a relatively small baseline length are selected as illustrated in FIG. 12C, so that the overlapping portion OPc between the two images F1c and F2c can be increased. This makes it possible to acquire the distance to the target object W more preferably on the basis of the two images F1c and F2c.

The information on the shape change of the images obtained by the three or more imaging devices 430 includes, for example, information on a difference in appearance of the target object W appearing in any two images of the three or more imaging devices 430. A difference in appearance of the target object W in the images captured by the different imaging devices 430 varies in size depending on a shape of the target object W, a shadow caused by an illumination with which the target object W is irradiated, and the like. The information on the shape change of the images obtained by the three or more imaging devices 430 includes, for example, a matching degree of appearance of the target object W in the two images, shape information of the target object W, and information on the illumination with which the target object W is irradiated. The control unit 40, for example, may perform matching on all combinations in which two images are selected from a plurality of images acquired by the respective imaging devices 430, and acquire the matching degree of the appearance of the target object W appearing in the respective images as a parameter. Further, the information on the shape change of the image may be input to the control unit 40 in advance.

Here, when the baseline length between the two imaging devices 430 is larger, it is easy for the appearance of the target object W to be greatly different in the images acquired by the two imaging devices 430. When the appearance of the target object W differs to some extent, it becomes difficult to perform matching between the two images. Therefore, in such a case, the baseline length is reduced so that it is possible to suppress a large difference in the appearance of the target object W and it is easy to perform matching between the two images. Therefore, the information on the distance to the target object W can be preferably acquired on the basis of the two images.

Therefore, the control unit 40 can select two images on the basis of the information on the shape change of the images obtained by the three or more imaging devices 430 to select two images that have a preferred baseline length based on the difference in appearance of the target object W for each image. That is, for example, when the target object W is a target object whose appearance is greatly different in the plurality of imaging devices 430, two images with a smaller baseline length are selected so that the information on the distance to the target object W can be preferably acquired on the basis of the two selected images.

Further, in the present embodiment, the control unit 40 may select two imaging devices 430 from among the three or more imaging devices 430 on the basis of at least one of the distance information related to the target object W obtained in advance, the information on occlusion of the target object W, the focal length information of the imaging devices 430, and information on shape change of the image obtained by the three imaging devices 430. In this case, imaging can be performed only by the two selected imaging devices 430 and the information on the distance to the target object W can be selected. Therefore, the load on the control unit 40 can be reduced as compared with a case in which two images are selected from the images acquired by performing imaging using all the imaging devices 430.

Further, in the present embodiment, when information such as a difference in appearance of the shape of the target object W and luminance of the target object W is known in advance, the control unit 40 may determine the imaging device 430 to be selected, on the basis of such information. The difference in appearance of the shape of the target object W and the luminance of the target object W, and the like may be acquired from the distance information related to the target object W obtained in advance.

Further, in the present embodiment, the three or more imaging devices 430 may be disposed at non-equidistant intervals on a predetermined circumference. Further, the three or more imaging devices 430 may be disposed side by side on a predetermined axis, like the imaging devices 230a, 230b, and 230c of the third embodiment described above. In this case, the three or more imaging devices 430 may be disposed such that the long sides of the image sensors 435 of the three or more imaging devices 430 are parallel. The three or more imaging devices 430 may be disposed in a matrix form. Further, the three or more imaging devices 430 may be time of flight cameras (TOF cameras).

Further, in the above-described embodiment, the three or more imaging devices 430 are disposed around the end effector 22, but the present invention is not limited thereto. The three or more imaging devices 430 may be disposed around any of the robot arm 21, the end effector 22 connected to the robot arm 21, and the adapter 23 for attaching the end effector 22 to the robot arm 21. Even when the three or more imaging devices 430 are disposed around the robot arm 21 or around the adapter 23, it is possible to obtain the same effects as those obtained when the three or more imaging devices 430 are disposed around the end effector 22 described above.

When the three or more imaging devices 430 are disposed around the robot arm 21, the robot arm 21 may include a holding portion that holds the three or more imaging devices 430 that image the target object W. Further, when the three or more imaging devices 430 are disposed around the adapter 23, the adapter 23 may include a holding portion that holds the three or more imaging devices 430 that image the target object W. Also in these cases, the control unit 40 may acquire the information on the distance to the target object W on the basis of information of images of the target object W acquired by the two imaging devices 430 of the three or more imaging devices 430 held by the robot arm 21 or the adapter 23.

Further, the control unit 40 may perform, a plurality of times, work for acquiring the information on the distance to the target object W based on the images acquired by the two imaging devices 430 among the three or more imaging devices 430, using two imaging devices 430 in different combination. In this case, the control unit 40 can collate the pieces of information on the distance to the target object W acquired through a plurality of works to acquire the information on the distance to the target object W more accurately.
In particular, when at least a portion of the target object W is blocked by a shielding object when viewed from at least some of the imaging devices 430, a plurality of pieces of information obtained using the two imaging devices 430 in a plurality of sets of combinations can be used to acquire the information on the distance to the target object W while minimizing an influence of shielding by the shielding object.

Further, after the target object W is imaged by all the imaging devices 430, the control unit 40 may move the end effector 22 by moving the robot arm 21 or the like, and image the target object W again using all the imaging devices 430 from other places. This makes it possible for the control unit 40 to acquire the image obtained by imaging the target object W from multiple angles. In this case, when the number of imaging devices 430 is relatively large, many images obtained by imaging the target object W from different angles can be acquired even when the end effector 22 is moved and the number of times of imaging is small. In this case, each acquired image may be associated with information such as the position and posture of the end effector 22 when the image has been captured, and the position and posture of the imaging device 430 that performs imaging.

As described above, when imaging of the target object W a plurality of times from different positions, the control unit 40 may control the robot system 410 through visual servo using the acquired images. In this case, the control unit 40 performs control, for example, to move the imaging device 430 to a position at which a target image of the target object W can be captured by the imaging device 430. Here, when the image of the target object W captured by the imaging device 430 at the initial position is greatly different from the target image of the target object W, it may be difficult to correspond the images to each other, and to move the imaging device 430 to the position at which the target image of the target object W can be captured.

On the other hand, imaging of the target object W are performed from different positions a plurality of times to acquire images of the target object W imaged from different angles, making it easy to bring the image captured by the imaging device 430 closer to the target image with the images captured from the different angles as intermediate images. That is, it is easy to preferably move the imaging device 430 to the position at which the target image of the target object W can be captured. Further, when the intermediate image is associated with distance information from the target object W when the intermediate image has been captured, the control unit 40 may arrange the intermediate images in an order of imaging at positions far from the target object W, and bring the image captured by the imaging device 430 closer to the target image while passing the plurality of intermediate images in that order.

Further, in the present embodiment, the robot system 410 may include, for example, a plurality of general-purpose cameras capable of simply capturing an image of the target object W, in addition to the plurality of imaging devices 430 described above. In this case, the control unit 40 may construct a 3D model of the target object W using a plurality of images captured by the plurality of general-purpose cameras. By using the 3D model, for example, it is possible to further improve acquisition accuracy of the information on the distance to the target object W using the plurality of imaging devices 430. In this case, as an example, 12 imaging devices 430 may be provided side by side at equal intervals in the circumferential direction, and two general-purpose cameras may be provided side by side in the circumferential direction between adjacent imaging devices 430. In this case, for example, 24 general-purpose cameras are provided. As the general-purpose camera, for example, a relatively inexpensive camera that is used in smartphones can be used.

Further, in the present embodiment, the control unit 40 may perform simultaneous localization and mapping (SLMA). That is, the control unit 40 may simultaneously perform self-position estimation of the robot system 410 and creation of a map of an environment in which the robot system 410 is disposed. In this case, when a relatively large number of imaging devices 430 are provided, it is possible to easily acquire a relatively large amount of 3D point cloud data for the environment using the plurality of imaging devices 430. Therefore, it is easy to create the map of the environment in which the robot system 410 is disposed.

### <Sixth embodiment>

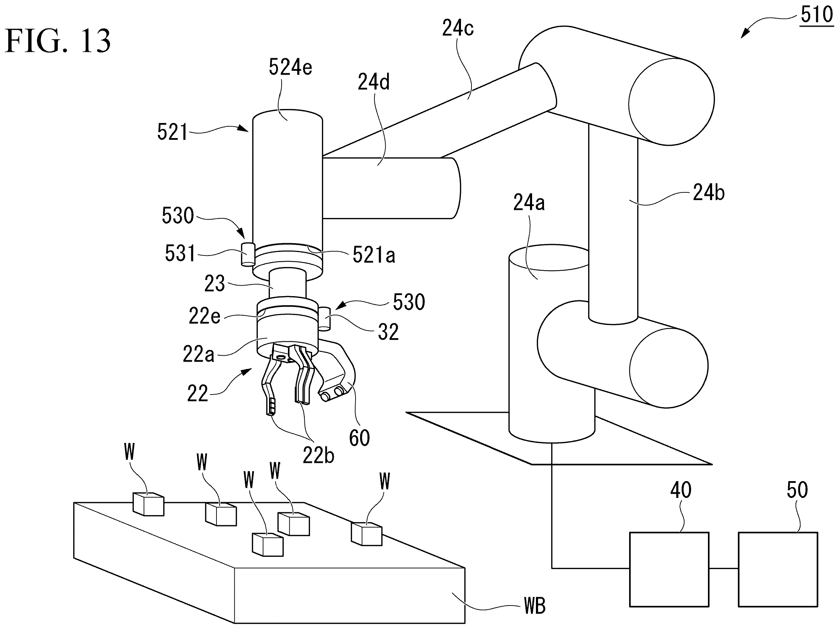

FIG. 13 is a perspective view illustrating a robot system 510 of the present embodiment. The same configurations as those in the above-described embodiment are appropriately denoted by the reference signs, for example, and description thereof will be omitted.

As illustrated in FIG. 13, in the robot system 510 of the present embodiment, the imaging device 530 includes a first imaging device 531 attached to the robot arm 521 and a second imaging device 32 attached to the end effector 22. The first imaging device 531 is disposed, for example, around a fifth arm portion 524e. The first imaging device 531, for example, is connected to a guide rail portion 521a provided on the fifth arm portion 524e according to the same structure as a structure in which the first imaging device 31 is connected to the guide rail portion 22e in the first embodiment.

The guide rail portion 521a has an annular shape surrounding the fifth arm portion 524e. The first imaging device 531 is movable in a predetermined circumferential direction around the robot arm 521 along the guide rail portion 521a. The robot arm 521 has the same configuration as the robot arm 21 of the first embodiment except that the guide rail portion 521a is provided. Other configurations of the robot system 510 of the present embodiment can be the same as those of the robot system of each embodiment described above.

According to the present embodiment, the first imaging device 531 and the second imaging device 32 are attached to different members and are movable relative to respective members to which the first imaging device 531 and the second imaging device 32 are attached. Therefore, it is possible to suppress the movement of the first imaging device 531 and the movement of the second imaging device 32 being hindered by the other imaging device, as compared with a case in which the two imaging devices are attached to the same member. This makes it possible to preferably move each of the first imaging device 531 and the second imaging device 32 relative to each of the members to which the first imaging device 531 and the second imaging device 32 are attached.

### <Seventh embodiment>

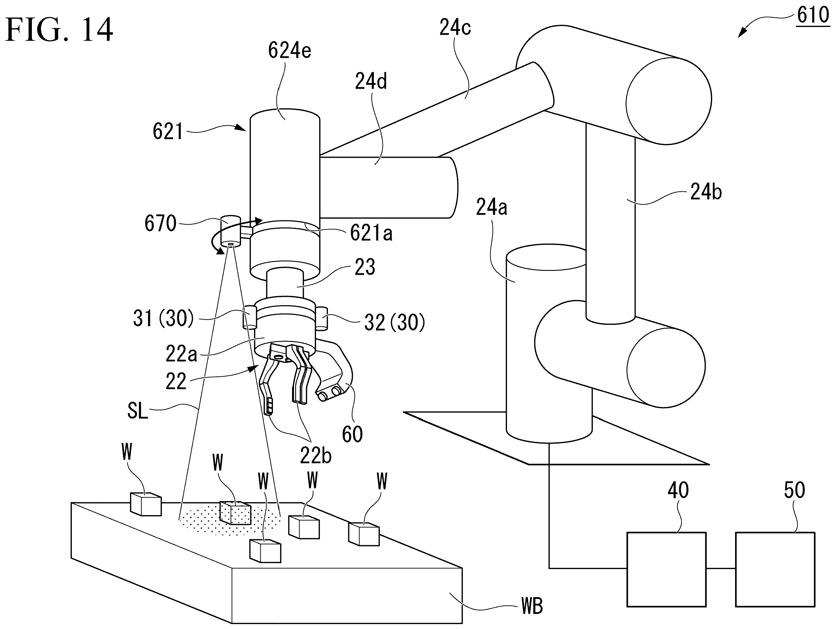

FIG. 14 is a perspective view illustrating a robot system 610 of the present embodiment. The same configurations as those in the above-described embodiment are appropriately denoted by the reference signs, for example, and description thereof will be omitted.

As illustrated in FIG. 14, the robot system 610 of the present embodiment includes a projection device 670 that projects light SL. In the present embodiment, the projection device 670 is disposed around the robot arm 621. The projection device 670 is disposed, for example, around a fifth arm portion 624e. The projection device 670 is connected to a guide rail portion 621a of the fifth arm portion 624e. The guide rail portion 621a has the same configuration as the guide rail portion 521a of the sixth embodiment, except that a projection device 670 is connected instead of the imaging device. In the present embodiment, the projection device 670 is movable in a predetermined circumferential direction around the robot arm 621 along the guide rail portion 621a. The projection device 670 projects the light SL in a grid pattern onto the target object W, for example. A structure of the projection device 670 is not particularly limited as long as the projection device 670 can project the light SL.

In the present embodiment, the first imaging device 31 and the second imaging device 32 executes imaging to acquire images in a state in which the light SL is projected by the projection device 670. In the present embodiment, the control unit 40 controls the projection device 670, the first imaging device 31, and the second imaging device 32 so that the light SL projected onto the target object W by the projection device 670 can be imaged by the first imaging device 31 and the second imaging device 32. The robot arm 621 has the same configuration as the robot arm 21 of the first embodiment except that the guide rail portion 621a is provided. Other configurations of the robot system 610 can be the same as those of the robot system of each embodiment described above.

According to the present embodiment, the first imaging device 31 and the second imaging device 32 executes imaging to acquire images in a state in which the light SL is projected by the projection device 670. Therefore, the target object W onto which the light SL is projected can be imaged by the first imaging device 31 and the second imaging device 32. This makes it possible to acquire the image of the target object W more preferably using the first imaging device 31 and the second imaging device 32. Further, the light SL projected from the projection device 670 is light with a pattern such as a grid pattern, making it possible to also measure, for example, a three-dimensional shape of the target object W on the basis of the pattern appearing in the images acquired by the first imaging device 31 and the second imaging device 32.

In the present embodiment, only the first imaging device 31 between the first imaging device 31 and the second imaging device 32 may execute imaging to acquire an image in a state in which the light SL is projected by the projection device 670. Further, only the second imaging device 32 between the first imaging device 31 and the second imaging device 32 may execute imaging to acquire an image in a state in which the light SL is projected by the projection device 670. Further, in the present embodiment, the robot system 610 may include only the first imaging device 31 between the first imaging device 31 and the second imaging device 32. In this case, the first imaging device 31 may execute imaging to acquire an image in a state in which the light SL is projected by the projection device 670, and acquire the information on the distance to the target object W using the same method as a method of acquiring the information on the distance to the target object W using one first imaging device 31 described in the second embodiment.

Further, in the present embodiment, the projection device 670 may be disposed around the end effector 22 or may be disposed around the adapter 23. Which portion among the robot arm 621, the end effector 22, and the adapter 23 around which the projection device 670 is disposed can be determined appropriately depends on positions at which the first imaging device 31 and the second imaging device 32 are attached, the work content of the robot system 610, and the like. The projection device 670 is disposed around the portion of the robot arm 621, the end effector 22, or the adapter 23, making it difficult for the light SL projected from the projection device 670 to be blocked by the portion of the robot system 610, and easy for the light SL projected from the projection device 670 to be preferably projected onto the target object W.

Further, the projection device 670 may be fixed not to move relative to a member to which the projection device 670 is attached. Further, a plurality of projection devices 670 may be provided. In this case, the plurality of projection devices 670 may be attached to different members.

### <Eighth embodiment>

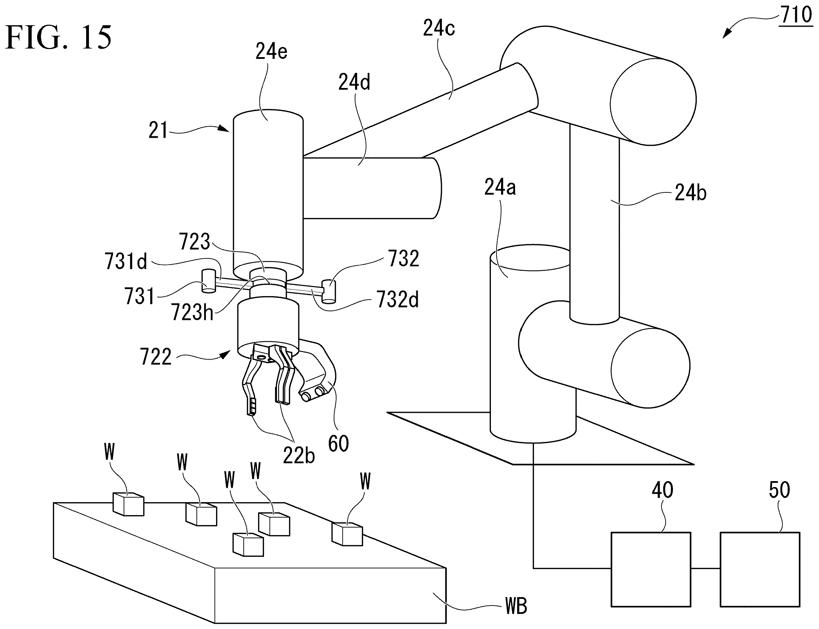

FIG. 15 is a perspective view illustrating a robot system 710 of the present embodiment. The same configurations as those in the above-described embodiment are appropriately denoted by the reference signs, for example, and description thereof will be omitted.

As illustrated in FIG. 15, in the present embodiment, the adapter 723 includes an annular guide rail portion 723h in the circumferential direction. The adapter 723 has the same configuration as the adapter 23 of the first embodiment except that the adapter 723 includes the guide rail portion 723h. In the present embodiment, the end effector 722 has the same configuration as the end effector 22 of the first embodiment except that the guide rail portion 22e is not included, and the first imaging device 731 and the second imaging device 732 are not attached.

The first imaging device 731 and the second imaging device 732 are attached to the adapter 723 in the present embodiment. The first imaging device 731 and the second imaging device 732 are disposed around the adapter 723. The first imaging device 731 is connected to the guide rail portion 723h via the slider 731d. The second imaging device 732 is connected to the guide rail portion 723h via the slider 732d. That is, in the present embodiment, the adapter 723 includes the guide rail portion 723h serving as a first holding portion that holds the first imaging device 731 and a second holding portion that holds the second imaging device 732.

In the present embodiment, the sliders 731d and 732d extend radially outward from the guide rail portion 723h and protrude radially outward relative to the end effector 722. Accordingly, the first imaging device 731 and the second imaging device 732 provided at the radially outer end portions of the sliders 731d and 732d are located radially outward relative to the end effector 722.

In the present embodiment, at least one of the first imaging device 731 and the second imaging device 732 is movable with respect to the adapter 723. The at least one of the first imaging device 731 and the second imaging device 732 is movable in a predetermined circumferential direction around the adapter 723. In the present embodiment, both the first imaging device 731 and the second imaging device 732 are movable with respect to the adapter 723 and movable in the predetermined circumferential direction around the adapter 723. That is, in the present embodiment, the first imaging device 731 and the second imaging device 732 are held to be movable by the guide rail portion 723h serving as the first holding portion and the second holding portion. The relative positions of the first imaging device 731 and the second imaging device 732 are variable. Other configurations of the robot system 710 can be the same as those of the robot system of each embodiment described above.

According to the present embodiment, with the first imaging device 731 and the second imaging device 732 attached to the adapter 723, it is possible to obtain the same effects as those obtained by the first imaging device 31 and the second imaging device 32 attached to the end effector 22 in the first embodiment.

In the present embodiment, the adapter 723 may have the first holding portion that holds the first imaging device 731 not to be movable. In this case, the adapter 723 may include the guide rail portion 723h serving as the second holding portion that holds the second imaging device 732 to be movable. Further, the adapter 723 may include the second holding portion that holds the second imaging device 732 not to be movable. In this case, the adapter 723 may include the guide rail portion 723h serving as the first holding portion that holds the first imaging device 731 to be movable. Thus, in the present embodiment, one of the first imaging device 731 and the second imaging device 732 is movable in the predetermined circumferential direction around the adapter 723, and the other may be fixed to a predetermined portion of the adapter 723.

### <Ninth embodiment>

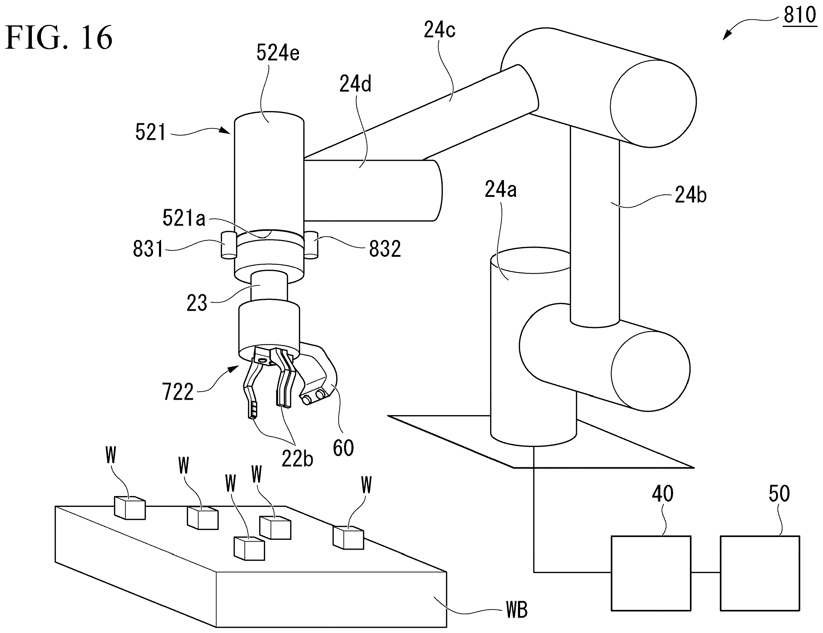

FIG. 16 is a perspective view illustrating a robot system 810 of the present embodiment. The same configurations as those in the above-described embodiment are appropriately denoted by the reference signs, for example, and description thereof will be omitted.

As illustrated in FIG. 16, the first imaging device 831 and the second imaging device 832 are attached to the robot arm 521 in the present embodiment. The first imaging device 831 and the second imaging device 832 are disposed around the robot arm 521. More specifically, the first imaging device 831 and the second imaging device 832 are disposed around the fifth arm portion 524e. The first imaging device 831 and the second imaging device 832, for example, are connected to the guide rail portion 521a according to the same structure as the structure in which the first imaging device 31 and the second imaging device 32 are connected in the first embodiment. That is, in the present embodiment, the robot arm 521 includes the guide rail portion 521a serving as a first holding portion that holds the first imaging device 831 and a second holding portion that holds the second imaging device 832.

In the present embodiment, at least one of the first imaging device 831 and the second imaging device 832 is movable with respect to the robot arm 521. The at least one of the first imaging device 831 and the second imaging device 832 is movable in a predetermined circumferential direction around the robot arm 521. In the present embodiment, both the first imaging device 831 and the second imaging device 832 are movable with respect to the robot arm 521 and is movable in the predetermined circumferential direction around the robot arm 521. That is, the first imaging device 831 and the second imaging device 832 are held to be movable by the guide rail portion 521a as the first holding portion and the second holding portion. The relative positions of the first imaging device 831 and the second imaging device 832 are variable. Other configurations of the robot system 810 can be the same as those of the robot system of each embodiment described above.

According to the present embodiment, with the first imaging device 831 and the second imaging device 832 attached to the robot arm 521, it is possible to obtain the same effects as those obtained by the first imaging device 31 and the second imaging device 32 attached to the end effector 22 in the first embodiment.

In the present embodiment, the robot arm 521 may include a first holding portion that holds the first imaging device 831 not to be movable. In this case, the robot arm 521 may include the guide rail portion 521a as a second holding portion that movably holds the second imaging device 832.

Further, the robot arm 521 may have the second holding portion that holds the second imaging device 832 not to be movable. In this case, the robot arm 521 may include the guide rail portion 521a as a first holding portion that movably holds the first imaging device 831. Thus, in the present embodiment, one of the first imaging device 831 and the second imaging device 832 is movable in a predetermined circumferential direction around the robot arm 521, and the other may be fixed to a predetermined portion of the robot arm 521.

Although the embodiments of the present invention have been described above in detail with reference to the drawings, a specific configuration is not limited to these embodiments, and changes can be made appropriately without departing from the scope of the present invention.

When the imaging device can move relative to the member to which the imaging device is attached, any method may be used to calibrate the position of the imaging device. For example, a panel or the like with a specific mark is disposed at a specific distance with respect to the imaging device and the mark is imaged so that the position of the imaging device may be calibrated. Further, When the imaging device can move relative to the member to which the imaging device is attached, the imaging device may be movable only between a plurality of predetermined locations. In this case, positions to which the imaging device can move may be structurally determined. In this case, it is possible to structurally ascertain the position of the imaging device.

When the imaging device can move relative to the member to which the imaging device is attached, the imaging device may move relative to the member in any way. The imaging device may move linearly with respect to the member, or may move in a curved line other than an arc. When the plurality of imaging devices can move relative to the member to which the plurality of imaging device are attached, each imaging device may move along different movement paths. There is no particular limitation on a structure of the drive unit that relatively moves the imaging device with respect to the member to which the imaging device is attached.

When a plurality of imaging devices are provided, the plurality of imaging devices may include different types of imaging devices. The plurality of imaging devices may include, for example, an infrared camera and an RGB camera. In this case, the target object may be imaged from the same position by the infrared camera and the RGB camera and images may be acquired.

The robot system may include an external sensor capable of detecting at least one of a position, posture, shape, and the like of the robot. The external sensor may be disposed on a ceiling of a place at which the robot is disposed, or may be disposed on a floor of the place at which the robot is disposed. The external sensor may be, for example, a sensor capable of detecting the position and posture of the robot arm, may be a sensor capable of detecting the position and posture of the end effector, or may be a sensor capable of detecting the position and posture of the adapter.

The external sensor may be, for example, a laser tracker. In this case, the external sensor may detect, for example, position information of each portion on the basis of a distance measurement result using a time-of-flight (TOF) method based on a difference between an irradiation timing at which light is radiated and a light reception timing at which reflected light is received. Further, the external sensor may detect the position information of each portion by obtaining a geometrical positional relationship through triangulation on the basis of a measurement result of a reflection position of reflected light generated due to radiation of light on a plurality of optical paths. In this case, the external sensor may include a variable focus lens (for example, a zoom lens) in an optical system of a light reception unit that receives reflected light, in order to improve measurement accuracy of a reflection position of the reflected light. Further, for position detection of each portion in the external sensor, a distance measurement scheme using an optical comb based on extremely short-time light pulses may be used.

The external sensor may be able to detect the position and posture of the imaging device. In this case, when the imaging device is movable relative to the member to which the imaging device is attached, the control unit may move the imaging device on the basis of information on the imaging device obtained by the external sensor. Further, in this case, the imaging device may be provided with a marker that can be detected by the external sensor.

The external sensor may be an imaging device with a variable baseline length. In this case, the control unit may change the baseline length of the external sensor, for example, depending on a distance between the external sensor and the target object on which work is performed by the end effector. As an example, the control unit may reduce the baseline length of the external sensor when the target object gripped by the end effector is brought closer to the external sensor by moving the robot arm. The baseline length of the external sensor can be changed, for example, by using the same method as a method of changing the baseline length appropriately described in each of the above-described embodiments.

Use of the robot system described above is not particularly limited. The respective configurations and the respective methods described above can be appropriately combined unless these are mutually inconsistent.

### [Reference Signs List]

10, 110, 210, 310, 410, 510, 610, 710, 810 Robot system
20 Robot
21, 521, 621 Robot arm
22, 122, 722 End effector
22e, 521a, 723h Guide rail portion (first holding portion and second holding portion)
23, 723 Adapter
24 Arm portion (movable portion)
30, 230, 230a, 230b, 230c, 430, 431, 432, 530 Imaging device
31, 331, 531, 731, 831 First imaging device
31f, 32f, 132f, 235a, 235b, 235c, 331f, 332f, 435 Image sensor
32, 132, 332, 732, 832 Second imaging device
34, 134 Position acquisition unit
40 Control unit
44 Distance information acquisition unit
50 Display unit
122f Hole portion (second holding portion)
336 Connection member
670 Projection device
AX1, AX1a, AX1b, AX1c, AX2, AX2a, AX2c, AX3a, AX3b, AX3c, AX4 Optical axis
L, L1, L2, L3, L4 La Baseline length
P1 First position
P2 Second position
SL Light
VA Axis
W Target object

## Claims

1. A robot system including a robot arm with a movable portion, the robot system comprising:
a first imaging device and a second imaging device attached to the robot arm;
a control unit configured to control the robot system; and
a distance information acquisition unit configured to acquire information on a distance to a target object,
wherein the control unit is capable of changing a baseline length, the baseline length being a distance between the first imaging device and the second imaging device, and
the distance information acquisition unit acquires the information on the distance to the target object on the basis of the baseline length.

2. The robot system according to claim 1, wherein the control unit changes the baseline length depending on work content of the robot system.

3. The robot system according to claim 1 or 2, further comprising:
a connection member configured to connect the first imaging device to the second imaging device,
wherein the connection member is capable of holding the first imaging device and the second imaging device in a state in which relative postures of the first imaging device and the second imaging device are maintained at predetermined postures.

4. The robot system according to any one of claims 1 to 3, wherein the distance information acquisition unit rotates at least one of a first image acquired by the first imaging device and a second image acquired by the second imaging device to adjust a direction of the acquired image.

5. The robot system according to any one of claims 1 to 4, wherein the control unit adjusts a direction of an image to be acquired, by rotating at least one of an image sensor of the first imaging device and an image sensor of the second imaging device.

6. The robot system according to any one of claims 1 to 5, wherein the first imaging device and the second imaging device are disposed around the robot arm.

7. The robot system according to claim 6, wherein at least one of the first imaging device and the second imaging device is movable in a predetermined circumferential direction around the robot arm.

8. A robot system including a robot arm with a movable portion, the robot system comprising:
a first imaging device and a second imaging device attached to the robot arm,
wherein at least one of the first imaging device and the second imaging device is movable with respect to the robot arm.

9. A robot system including a robot arm with a movable portion, the robot system comprising:
an end effector attached to the robot arm; and
a first imaging device and a second imaging device attached to the end effector,
wherein at least one of the first imaging device and the second imaging device is movable with respect to the end effector.

10. A robot system including a robot arm with a movable portion, the robot system comprising:
an adapter for attaching an end effector to the robot arm; and
a first imaging device and a second imaging device attached to the adapter,
wherein at least one of the first imaging device and the second imaging device is movable with respect to the adapter.

11. A robot system including a robot arm with a movable portion, the robot system comprising:
a first imaging device and a second imaging device attached to the robot arm,
wherein relative positions of the first imaging device and the second imaging device are variable.

12. A robot system including a robot arm with a movable portion, the robot system comprising:
an end effector attached to the robot arm; and
a first imaging device and a second imaging device attached to the end effector,
wherein relative positions of the first imaging device and the second imaging device are variable.

13. A robot system including a robot arm with a movable portion, the robot system comprising:
an adapter for attaching an end effector to the robot arm; and
a first imaging device and a second imaging device attached to the adapter,
wherein relative positions of the first imaging device and the second imaging device are variable.

14. The robot system according to any one of claims 8 to 13, wherein an optical axis of the first imaging device and an optical axis of the second imaging device are parallel to each other.

15. The robot system according to any one of claims 8 to 14, wherein at least one of the first imaging device and the second imaging device is movable such that long sides of an image sensor of the first imaging device and an image sensor of the second imaging device are parallel to each other.

16. The robot system according to any one of claims 8 to 15, further comprising:
a connection member configured to connect the first imaging device to the second imaging device,
wherein the connection member is capable of holding the first imaging device and the second imaging device in a state in which relative postures of the first imaging device and the second imaging device are maintained at predetermined postures.

17. The robot system according to any one of claims 8 to 16, further comprising:
a control unit configured to control the robot system; and
a distance information acquisition unit configured to acquire information on a distance to a target object,
wherein the control unit is capable of changing a baseline length, the baseline length being a distance between the first imaging device and the second imaging device, and
the distance information acquisition unit acquires the information on the distance to the target object on the basis of the baseline length.

18. The robot system according to claim 17, further comprising:
a position acquisition unit configured to acquire at least position information of the first imaging device,
wherein the distance information acquisition unit acquires the baseline length on the basis of the position information of the first imaging device acquired by the position acquisition unit.

19. The robot system according to claim 17 or 18, wherein the control unit changes the baseline length depending on work content of the robot system.

20. The robot system according to any one of claims 17 to 19, wherein the distance information acquisition unit rotates at least one of a first image acquired by the first imaging device and a second image acquired by the second imaging device to adjust a direction of the acquired image.

21. The robot system according to any one of claims 17 to 19, wherein the control unit adjusts a direction of an image to be acquired, by rotating at least one of an image sensor of the first imaging device and an image sensor of the second imaging device.

22. The robot system according to any one of claims 8 to 11, wherein the first imaging device and the second imaging device are disposed around the robot arm.

23. The robot system according to claim 22, wherein at least one of the first imaging device and the second imaging device is movable in a predetermined circumferential direction around the robot arm.

24. The robot system according to claim 22, wherein one of the first imaging device and the second imaging device is movable in a predetermined circumferential direction around the robot arm, and the other is also movable in the predetermined circumferential direction, or the other is fixed with respect to a predetermined portion of the robot arm.

25. The robot system according to claim 9 or 12, wherein the first imaging device and the second imaging device are disposed around the end effector.

26. The robot system according to claim 25, wherein at least one of the first imaging device and the second imaging device is movable in a predetermined circumferential direction around the end effector.

27. The robot system according to claim 25, wherein one of the first imaging device and the second imaging device is movable in a predetermined circumferential direction around the end effector, and the other is also movable in the predetermined circumferential direction, or the other is fixed with respect to a predetermined portion of the end effector.

28. The robot system according to claim 10 or 13, wherein the first imaging device and the second imaging device are disposed around the adapter.

29. The robot system according to claim 28, wherein at least one of the first imaging device and the second imaging device is movable in a predetermined circumferential direction around the adapter.

30. The robot system according to claim 28, wherein one of the first imaging device and the second imaging device is movable in a predetermined circumferential direction around the adapter, and the other is also movable in the predetermined circumferential direction, or the other is fixed with respect to a predetermined portion of the adapter.

31. A robot system including a robot arm with a movable portion, the robot system comprising:
a first imaging device configured to be movable with respect to the robot arm; and
a distance information acquisition unit configured to acquire information on a distance to a target object on the basis of an image captured by the first imaging device,
wherein the first imaging device captures a first image of the target object at a first position, and captures a second image of the target object at a second position different from the first position, and
the distance information acquisition unit acquires the information on the distance to the target object on the basis of the first image and the second image.

32. A robot system including a robot arm with a movable portion, the robot system comprising:
an end effector attached to the robot arm;
a first imaging device configured to be movable with respect to the end effector; and
a distance information acquisition unit configured to acquire information on a distance to a target object on the basis of an image captured by the first imaging device,
wherein the first imaging device captures a first image of the target object at a first position, and captures a second image of the target object at a second position different from the first position, and
the distance information acquisition unit acquires the information on the distance to the target object on the basis of the first image and the second image.

33. A robot system including a robot arm with a movable portion, the robot system comprising:
an adapter for attaching an end effector to the robot arm; and
a first imaging device configured to be movable with respect to the adapter; and
a distance information acquisition unit configured to acquire information on a distance to a target object on the basis of an image captured by the first imaging device,
wherein the first imaging device captures a first image of the target object at a first position, and captures a second image of the target object at a second position different from the first position, and
the distance information acquisition unit acquires the information on the distance to the target object on the basis of the first image and the second image.

34. The robot system according to any one of claims 31 to 33, wherein the first imaging device is movable such that long sides of an image sensor of the first imaging device at the first position and an image sensor of the first imaging device at the second position are parallel to each other.

35. The robot system according to any one of claims 31 to 34, further comprising:
a control unit configured to control the robot system,
wherein the control unit is capable of changing a baseline length, the baseline length being a distance between the first imaging device at the first position and the first imaging device at the second position, and
the distance information acquisition unit acquires the information on the distance to the target object on the basis of the baseline length.

36. The robot system according to claim 35, further comprising:
a position acquisition unit configured to acquire position information on the first position and the second position,
wherein the distance information acquisition unit acquires the baseline length on the basis of position information on the first position and the second position acquired by the position acquisition unit.

37. The robot system according to claim 35 or 36, wherein the control unit changes the baseline length depending on work content of the robot system.

38. The robot system according to any one of claims 35 to 37, wherein the distance information acquisition unit rotates at least one of a first image acquired at the first position by the first imaging device and a second image acquired at the second position by the first imaging device to adjust a direction of the acquired image.

39. The robot system according to any one of claims 35 to 37, wherein the control unit adjusts a direction of an image acquired by the first imaging device by rotating an image sensor of the first imaging device.

40. The robot system according to claim 31, wherein the first imaging device is movable in a predetermined circumferential direction around the robot arm.

41. The robot system according to claim 32, wherein the first imaging device is movable in a predetermined circumferential direction around the end effector.

42. The robot system according to claim 33, wherein the first imaging device is movable in a predetermined circumferential direction around the adapter.

43. The robot system according to any one of claims 8 to 42, wherein at least the first imaging device moves to the predetermined initial position after the robot system is powered on.

44. The robot system according to claim 43, wherein the movement of the first imaging device to the predetermined initial position is performed in a state in which a member to which the first imaging device is attached is stationary.

45. The robot system according to any one of claims 8 to 44, wherein at least the first imaging device moves to a predetermined end position before the robot system is powered off.

46. The robot system according to claim 45, wherein the movement of the first imaging device to the predetermined end position is performed in a state in which a member to which the first imaging device is attached is stationary.

47. The robot system according to any one of claims 8 to 46, further comprising a projection device configured to project light,
wherein at least the first imaging device executes imaging to acquire an image in a state in which the light is projected by the projection device.

48. A robot system comprising:
a robot arm;
three or more imaging devices configured to image a target object; and
a control unit configured to acquire information on a distance to the target object on the basis of information of images of the target object acquired by two of the three or more imaging devices.

49. The robot system according to claim 48, wherein the control unit selects two images from among three or more images acquired by the three or more imaging devices, and acquires the information on the distance to the target object on the basis of information on the two selected images.

50. The robot system according to claim 48, wherein the control unit selects the two imaging devices from the three or more imaging devices, and acquires the information on the distance to the target object on the basis of information on images acquired by the two selected imaging devices.

51. A robot system comprising:
a robot arm;
three or more imaging devices configured to image a target object; and
a control unit configured to control at least one of the robot arm and an end effector connected to the robot arm on the basis of information on images acquired by two of the three or more imaging devices.

52. The robot system according to claim 51, wherein the control unit selects two images from among three or more images acquired by the three or more imaging devices, and controls at least one of the robot arm and an end effector connected to the robot arm on the basis of information on the two selected images.

53. The robot system according to claim 51, wherein the control unit selects the two imaging devices from the three or more imaging devices, and controls at least one of the robot arm and an end effector connected to the robot arm on the basis of information on images acquired by the two selected imaging devices.

54. The robot system according to claim 49 or 52, wherein the control unit selects the two images on the basis of at least one of distance information related to the target object obtained in advance, information on occlusion of the target object, focal length information of the imaging device, and information on shape change of images obtained by the three or more imaging devices.

55. The robot system according to claim 50 or 53, wherein the control unit selects the two imaging devices on the basis of at least one of distance information related to the target object obtained in advance, information on occlusion of the target object, focal length information of the imaging device, and information on shape change of images obtained by the three or more imaging devices.

56. The robot system according to any one of claims 48 to 55, wherein the control unit performs control to synchronize imaging in at least two of the three or more imaging devices.

57. The robot system according to any one of claims 17 to 21, claims 31 to 33, and claims 48 to 50, further comprising:
a display unit configured to display information based on the information on the distance.

58. A robot system comprising:
a robot arm; and
three or more imaging devices,
wherein the three or more imaging devices are disposed around any one of the robot arm, an end effector connected to the robot arm, and an adapter for attaching the end effector to the robot arm.

59. The robot system according to claim 58, wherein the three or more imaging devices are disposed side by side on a predetermined axis.

60. The robot system according to claim 58, wherein the three or more imaging devices are disposed side by side on a predetermined circumference.

61. The robot system according to claim 60, wherein the three or more imaging devices are disposed at equal intervals on the circumference.

62. The robot system according to any one of claims 58 to 61, wherein the optical axes of the three or more imaging devices are parallel to each other.

63. The robot system according to any one of claims 58 to 62, wherein the three or more imaging devices are disposed such that respective long sides of image sensors of the three or more imaging devices are parallel.

64. The robot system according to any one of claims 58 to 63, further comprising a projection device configured to project light,
wherein the projection device is disposed around any one of the robot arm, the end effector, and the adapter.

65. A robot arm comprising:
a first holding portion configured to hold a first imaging device; and
a second holding portion configured to hold a second imaging device,
wherein the first imaging device is held to be movable by the first holding portion, or the second imaging device is held to be movable by the second holding portion.

66. An end effector attached to a robot arm, the end effector comprising:
a first holding portion configured to hold a first imaging device; and
a second holding portion configured to hold a second imaging device,
wherein the first imaging device is held to be movable by the first holding portion, or the second imaging device is held to be movable by the second holding portion.

67. An adapter for attaching an end effector to a robot arm, the adapter comprising:
a first holding portion configured to hold a first imaging device; and
a second holding portion configured to hold a second imaging device,
wherein the first imaging device is held to be movable by the first holding portion, or the second imaging device is held to be movable by the second holding portion.

68. A robot arm comprising:
a first holding portion configured to hold a first imaging device; and
a second holding portion configured to hold a second imaging device,
wherein relative positions of the first imaging device and the second imaging device are variable.

69. An end effector attached to a robot arm, the end effector comprising:
a first holding portion configured to hold a first imaging device; and
a second holding portion configured to hold a second imaging device,
wherein relative positions of the first imaging device and the second imaging device are variable.

70. An adapter for attaching an end effector to a robot arm, the adapter comprising:
a first holding portion configured to hold a first imaging device; and
a second holding portion configured to hold a second imaging device,
wherein relative positions of the first imaging device and the second imaging device are variable.

71. A robot arm comprising:
a holding portion configured to hold three or more imaging devices configured to image a target object; and
a control unit configured to acquire information on a distance of the target object on the basis of information of images of the target object acquired by two of the three or more imaging devices.
